(19) Europäisches Patentamt
European Patent Office
Office européen des brevets

(11) EP 1 847 567 A1

(12) EUROPEAN PATENT APPLICATION
published in accordance with Art. 158(3) EPC

(43) Date of publication:
**24.10.2007 Bulletin 2007/43**

(21) Application number: **05822450.2**

(22) Date of filing: **27.12.2005**

(51) Int Cl.:
***C08L 33/14*** *(2006.01)* ***C08L 25/00*** *(2006.01)*
***C08L 45/00*** *(2006.01)* ***C08L 65/00*** *(2006.01)*
***G02B 5/30*** *(2006.01)*

(86) International application number:
**PCT/JP2005/023935**

(87) International publication number:
**WO 2006/070820 (06.07.2006 Gazette 2006/27)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **27.12.2004 JP 2004377073**

(71) Applicant: **JSR Corporation**
**Tokyo 104-0045 (JP)**

(72) Inventors:
- **MIYAMOTO, Yoshikazu, JSR CORPORATION Tokyo 104-0045 (JP)**
- **MIYAKI, Nobuyuki, JSR CORPORATION Tokyo 104-0045 (JP)**
- **KAWASHIMA, Naoyuki, JSR CORPORATION Tokyo 104-0045 (JP)**
- **KAJIWARA, Ichiro, JSR CORPORATION Tokyo 104-0045 (JP)**

(74) Representative: **TBK-Patent**
**Bavariaring 4-6**
**80336 München (DE)**

# (54) THERMOPLASTIC RESIN COMPOSITION, OPTICAL FILM AND ORIENTED FILM

(57) The present invention is intended to provide a thermoplastic resin composition which exhibits excellent compatibility while retaining low birefringence and is excellent in weathering resistance and heat resistance, an optical film which is obtained from the thermoplastic resin composition and a retardation film which is excellent in weathering resistance and heat resistance and has reciprocal wavelength dispersion properties. The thermoplastic resin composition comprises a vinyl-based polymer (A) having a unit represented by the following formula (I) and a cycloolefin-based polymer (B).

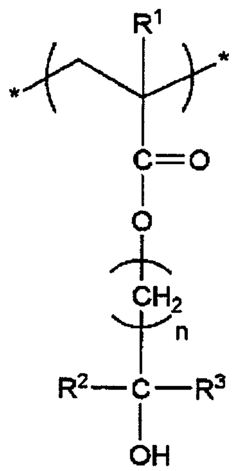

(I)

wherein $R^1$ to $R^3$ are each a hydrogen atom, a halogen atom, a substituted or unsubstituted hydrocarbon group of 1 to 30 carbon atoms which may have a linkage containing an oxygen atom, a sulfur atom, a nitrogen atom or a silicon atom, or a polar group, and n is 0 or a positive integer.

EP 1 847 567 A1

## Description

TECHNICAL FIELD

The present invention relates to a thermoplastic resin composition comprising a vinyl-based polymer having an aliphatic hydroxyl group in the side chain and a cycloolefin-based polymer and an optical film of the thermoplastic resin composition. The present invention also relates to an oriented film (retardation film) obtained by stretch-orienting the optical film.

In this specification, the term "birefringence" is used in a usual meaning. The birefringence value (referred to as "Δn") is a positive to negative value defined by the formula:

$$\Delta n = n_x - n_y$$

with the proviso that in an oriented film obtained by monoaxially stretching a film of the thermoplastic resin composition to orient polymer molecular chains in one direction, the stretching direction is taken as x-axis, the in-plane vertical direction to the stretching direction is taken as γ-axis, the refractive index of the film in the x-axis direction is represented by $n_x$, and the refractive index of the film in the y-axis direction is represented by ny. The absolute value of the birefringence varies depending upon the wavelength of an incident light.

The retardation (referred to as "Re") is a positive to negative value defined by the formula:

$$Re = \Delta n \times d$$

wherein d is an optical path length of a transmitted light and is usually a thickness of the above-mentioned oriented film. The absolute value of the retardation varies depending upon the wavelength of an incident light.

The wavelength dispersion of the retardation means correlation between the value of Re and the wavelength of an incident light. The expression "wavelength dispersion of retardation is large" means that the difference between the absolute value of Re for an incident light of a short wavelength and the absolute value of Re for an incident light of a long wavelength is large.

In the present invention, the term "polymer" is sometimes used in a meaning including not only a "homopolymer" but also a "copolymer", and the term "polymerization" is sometimes used in a meaning including not only "homopolymerization" but also "copolymerization".

BACKGROUND ART

Cycloolefin-based ring-opened polymers are non-crystalline polymers because their main chain skeletons have a bulky alicyclic structure, and they have features, such as excellent transparency, excellent heat resistance, small optical strain (low coefficient of photoelasticity), low water absorption properties, resistance to acids and alkalis and high electrical insulation properties. Therefore, studies have been made of the polymers as materials applicable to displays (retardation film, diffusion film, wave plate, liquid crystal substrate, touch panel film, light-guide plate, etc.), optical lenses, optical discs, optical fibers, optical films/sheets, optical semiconductor sealing, printed wiring boards (rigid printed wiring board, multi-layer printed wiring board), transparent conductive film substrates, etc. In the retardation film applications of the above applications, an improvement in obtaining a retardation film of very excellent uniformity of birefringence by precisely stretching a norbornene-based ring-opened polymer having a relatively low coefficient of photoelasticity has been made in order to meet the requirement for oriented films having higher uniformity of birefringence.

For liquid crystal TV apparatuses using transmission type liquid crystal displays (particularly VA (vertically aligned) mode), high resolution displaying with a wide angle of field and high luminance is required more than ever, as the sizes of the displays are increased. In the transmission type liquid crystal display in which two polarizing plates are used under the crossed-Nicols condition (the condition where transmission axes of the polarizing plates meet at right angles), if the position at which the display is observed is changed to the oblique direction from the front of the display, the angle between the transmission axes of the two polarizing plates deviates from 90 degrees, and therefore, there occur problems such as light leakage and decoloring (coloring) in the black display. In order to solve such problems, various retardation films are interposed between the liquid crystal cell and each polarizing plate to compensate for dependence of the polarizing plate on the angle of field, but satisfactory quality has not been obtained yet.

As high resolution color displaying of the liquid crystal displays is promoted as above, it is desired to further impart optical

functions to high-molecular compounds used in the retardation films. For example, in order to exhibit desired retardation over the whole wavelength region of visible light, it has been desired to freely control the absolute value of birefringence and the wavelength dispersion thereof. However, most of the norbornene-based ring-opened polymers having been studied in the past have extremely small wavelength dispersion of birefringence in the wavelength region of 400 to 800 nm, and they exhibit dispersion properties that as the wavelength becomes longer, the retardation becomes smaller ($Re_{400}>Re_{550}>Re_{800}$).

In connection therewith, there are disclosed some attempts to control the absolute value and the wavelength dispersion of birefringence by introducing a substituted aromatic group into a side chain of a cycloolefin-based ring-opened polymer (see patent documents 1 to 3). In order to obtain such a polymer, however, a norbornene-based monomer having a special structure that is a precursor of the polymer needs to be newly synthesized. Therefore, there arise such problems that the production process becomes complicated and reduction of the cost of the polymer is difficult, so that practical use of such a polymer has not been realized yet.

In order to obtain special wavelength dispersion ($Re_{400}<Re_{550}<Re_{800}$), a thermoplastic resin composition obtained by blending a publicly known cycloolefin-based ring-opened polymer with polystyrene in the presence of a compatibilizing agent is disclosed (patent document 4). However, if the resin composition containing a compatibilizing agent is used in a retardation film, the compatibilizing agent functions as an orientation relaxing agent for the resin, so that there arises a problem that development of retardation and stability of retardation are deteriorated. Further, as blends using no compatibilizing agent, there are disclosed a resin composition comprising a publicly known cycloolefin-based ring-opened polymer and a polar group-containing polystyrene resin (patent document 5) and a resin composition comprising a publicly known cycloolefin-based ring-opened polymer and a maleic anhydride/styrene copolymer (patent document 6). In the case of the former, however, a problem of coloring (yellowing) of the blend sometimes occurs. In the case of the latter, because of high reactivity of the maleic anhydride unit, decomposition thereof into carboxylic acid or the like due to moisture or the like in the surrounding atmosphere is possible. Therefore, there is a fear that their reliability is insufficient in the use for optical films. Accordingly, development of polymers having compatibility with publicly known cycloolefin-based ring-opened polymers and having more stable structure has been desired.

Patent document 1: Japanese Patent Laid-Open Publication No. 321535/2003
Patent document 2: Japanese Patent Laid-Open Publication No. 176051/2004
Patent document 3: Japanese Patent Laid-Open Publication No. 323489/2004
Patent document 4: Japanese Patent Laid-Open Publication No. 194527/2001
Patent document 5: Japanese Patent Laid-Open Publication No. 323098/1999
Patent document 6: Japanese Patent Laid-Open Publication No. 337222/2001

## DISCLOSURE OF THE INVENTION

### PROBLEM TO BE SOLVED BY THE INVENTION

The present invention is intended to solve such problems associated with the background art as mentioned above, and it is an object of the invention to provide a thermoplastic resin composition which exhibits excellent compatibility while retaining low birefringence and is excellent in weathering resistance and heat resistance. It is another object of the invention to provide an optical film comprising the thermoplastic resin composition. It is a further object of the invention to provide a retardation film which retains excellent development of retardation, is excellent in weathering resistance and heat resistance and has special wavelength dispersion properties ($Re_{400}<Re_{550}<Re_{800}$).

### MEANS TO SOLVE THE PROBLEM

In order to solve the above problems, the present inventors have earnestly studied, and as a result, they have found that a thermoplastic resin composition comprising a vinyl-based polymer having an aliphatic hydroxyl group in the side chain and a cycloolefin-based polymer has low birefringence and excellent compatibility and is excellent in weathering resistance and heat resistance. Based on the finding, the present invention has been accomplished. The present inventors have further found that a retardation film obtained from the thermoplastic resin composition exhibits excellent development of retardation, weathering resistance and heat resistance and has special wavelength dispersion properties ($Re_{400}<Re_{550}<Re_{800}$). Based on the finding, the present invention has been accomplished.

That is to say, the thermoplastic resin composition of the present invention comprises a vinyl-based polymer (A) having a unit represented by the following formula (I) and a cycloolefin-based polymer (B);

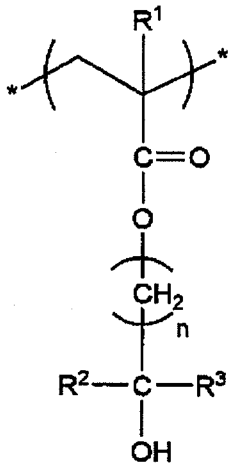

(I)

wherein $R^1$ to $R^3$ are each independently a hydrogen atom, a halogen atom, a substituted or unsubstituted hydrocarbon group of 1 to 30 carbon atoms which may have a linkage containing an oxygen atom, a sulfur atom, a nitrogen atom or a silicon atom, or a polar group, and n is 0 or a positive integer.

In the present invention, the vinyl-based polymer (A) preferably further has at least one unit selected from units of the following formula (II) and the following formula (III) :

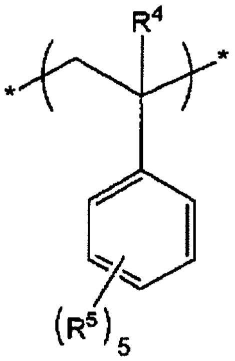

(II)

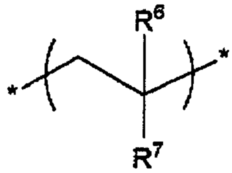

(III)

wherein $R^4$ to $R^7$ are each independently a hydrogen atom, a halogen atom, a substituted or unsubstituted hydrocarbon group of 1 to 30 carbon atoms which may have a linkage containing an oxygen atom, a sulfur atom, a nitrogen atom or a silicon atom, or a polar group, and $R^5$ may be all the same atoms or groups as one another or may be different atoms or groups from one another.

The vinyl-based polymer (A) is preferably a polymer having repeating units represented by the following formulas (1):

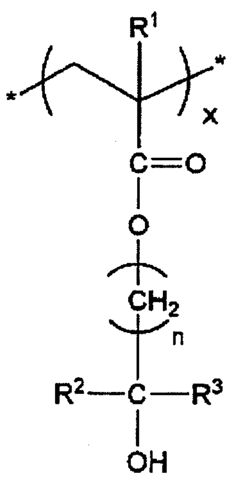
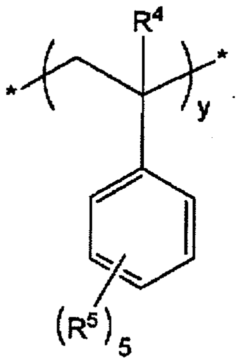
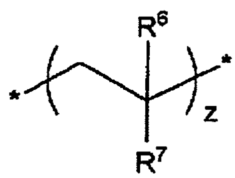

(1)

wherein $R^1$ to $R^7$ are each independently a hydrogen atom, a halogen atom, a substituted or unsubstituted hydrocarbon group of 1 to 30 carbon atoms which may have a linkage containing an oxygen atom, a sulfur atom, a nitrogen atom or a silicon atom, or a polar group, $R^5$ may be all the same atoms or groups as one another or may be different atoms or groups from one another, n is 0 or a positive integer, and x, y and z are each a weight percent of the repeating unit based on x+y+z=100% by weight and satisfy the conditions of $1<x<20$ and $80<y<99$.

In the present invention, it is also preferable that in the vinyl-based polymer (A) represented by the formulas (1), n is a number of $0<n<4$, and $R^1$ to $R^4$ are each a hydrogen atom or a methyl group.

In the present invention, the cycloolefin-based polymer (B) is preferably a polymer obtained by polymerizing a monomer represented by the following formula (2):

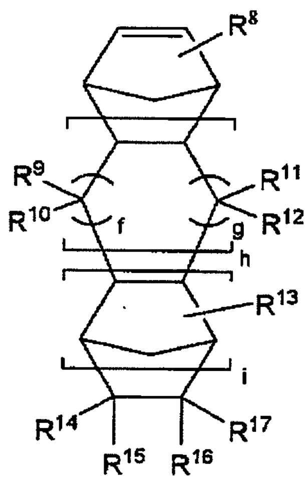

(2)

wherein f and g are each independently 0 or 1 with the proviso that at least one of them is 1, h and i are each independently an integer of 0 to 2, $R^8$ to $R^{17}$ are each independently an atom or a group selected from the group consisting of a hydrogen atom, a halogen atom, a substituted or unsubstituted hydrocarbon group of 1 to 30 carbon atoms which may have a linkage containing an oxygen atom, a nitrogen atom, a sulfur atom or a silicon atom, and a polar group, $R^{14}$ and $R^{15}$, and/or $R^{16}$ and $R^{17}$ may be united to form a hydrocarbon group, and $R^{14}$ or $R^{15}$ and $R^{16}$ or $R^{17}$ may be bonded to each other to form a carbon ring or a heterocyclic ring (said carbon ring or said heterocyclic ring may have a monocyclic structure or may be condensed with another ring to form a polycyclic structure).

The cycloolefin-based polymer (B) is also preferably a polymer which is obtained by ring-opening polymerization of the monomer represented by the formula (2) and which has a structural unit represented by the following formula (3):

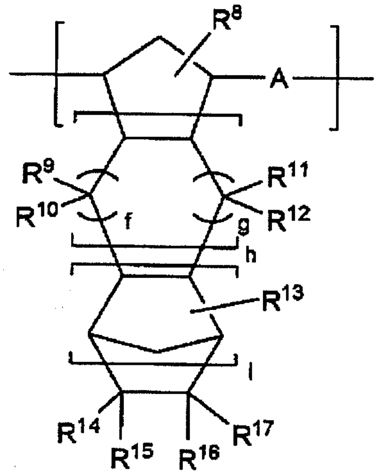

(3)

wherein f and g are each independently 0 or 1 with the proviso that at least one of them is 1, h and i are each independently an integer of 0 to 2, $R^8$ to $R^{17}$ are each independently an atom or a group selected from the group consisting of a hydrogen atom, a halogen atom, a substituted or unsubstituted hydrocarbon group of 1 to 30 carbon atoms which may have a linkage containing an oxygen atom, a nitrogen atom, a sulfur atom or a silicon atom, and a polar group, $R^{14}$ and $R^{15}$, and/or $R^{16}$ and $R^{17}$ may be united to form a hydrocarbon group, $R^{14}$ or $R^{15}$ and $R^{16}$ or $R^{17}$ may be bonded to each other to form a carbon ring or a heterocyclic ring (said carbon ring or said heterocyclic ring may have a monocyclic structure or may be condensed with another ring to form a polycyclic structure), A is a group represented by the formula -CH=CH- or a group represented by the formula - $CH_2CH_2$-, and plural A may be the same or different.

In the formula (3) representing the structural unit of the cycloolefin-based polymer (B), it is preferable that h is 0, i is 0 or 1, and at least one of $R^{14}$ to $R^{17}$ is a group represented by the formula $-(CH_2)_pCOOR^{18}$ (wherein $R^{18}$ is a hydrocarbon group of 1 to 20 carbon atoms, and p is an integer of 0 to 10).
The blending ratio (A/B) by weight of the vinyl-based polymer (A) to the cycloolefin-based polymer (B) is preferably in the range of 10/90 to 50/50.

The optical film of the present invention is obtained by molding the above-mentioned thermoplastic resin composition.
The oriented film of the present invention is obtained by stretch-orienting the above-mentioned optical film and has properties that when retardation values of the oriented film at wavelengths of 400 nm, 550 nm and 800 nm are represented by $Re_{400}$, $Re_{550}$ and $Re_{800}$, respectively, they have a relationship of $Re_{400}<Re_{550}<Re_{800}$.

## EFFECT OF THE INVENTION

According to the present invention, the thermoplastic resin composition and the optical film exhibit low birefringence and excellent compatibility and are excellent in weathering resistance and heat resistance. Further, the retardation film obtained by stretching the optical film exhibits excellent development of retardation, is excellent in weathering resistance and heat resistance and has reciprocal wavelength dispersion properties.

## BEST MODE FOR CARRYING OUT THE INVENTION

The thermoplastic resin composition and the optical film of the invention comprise (A) a vinyl-based polymer and (B) a cycloolefin-based polymer.

### (A) Vinyl-based polymer

The vinyl-based polymer (A) for use in the invention is a polymer having a structural unit represented by the following formula (I), and is preferably a copolymer further having at least one structural unit selected from units of the following formula (II) and the following formula (III).

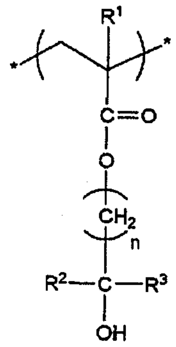
(I)
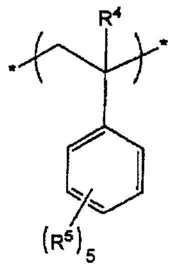
(II)
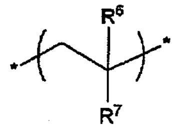
(III)

In the above formulas, $R^1$ to $R^7$ are each independently a hydrogen atom, a halogen atom, a substituted or unsubstituted hydrocarbon group of 1 to 30 carbon atoms which may have a linkage containing an oxygen atom, a sulfur atom, a nitrogen atom or a silicon atom, or a polar group, $R^5$ may be all the same atoms or groups as one another or may be different atoms or groups from one another, and n is 0 or a positive integer.
Examples of the halogen atoms include a fluorine atom, a chlorine atom and a bromine atom.

Examples of the hydrocarbon groups of 1 to 30 carbon atoms include alkyl groups, such as methyl, ethyl and propyl; cycloalkyl groups, such as cyclopentyl and cyclohexyl; alkenyl groups, such as vinyl, allyl and propenyl; alkylidene groups, such as ethylidene and propylidene; aryl groups, such as phenyl, naphthyl and anthracenyl; and groups represented by the formula $-(CH_2)_m-R'$ (wherein R' is the above-mentioned cycloalkyl group or the above-mentioned aryl group, and m is an integer of 1 to 10), e.g., aralkyl groups, such as benzyl and 2-phenylethyl. Hydrogen atoms bonded to carbon atoms in these groups may be replaced with a halogen atom, such as fluorine, chlorine or bromine, a phenylsulfonyl group, and a cyano group.

The above substituted or unsubstituted hydrocarbon group may be directly bonded to the ring structure, or may be bonded thereto through a linkage. The linkage is, for example, a divalent hydrocarbon group of 1 to 10 carbon atoms (e.g., alkylene group represented by the formula $-(CH_2)_m-$ wherein m is an integer of 1 to 10), or a linkage containing an oxygen atom, a nitrogen atom, a sulfur atom or a silicon atom, e.g., carbonyl group (-CO-), carbonyloxy group (-COO-), oxycarbonyl group (-O(CO)-), sulfonyl group ($-SO_2-$), sulfonyloxy group ($-SO_2O-$), oxysulfonyl group ($-OSO_2-$), ether bond (-O-), thioether bond (-S-), imino group (-NH-), amide bond (-NHCO-, -CONH-) or a linkage containing a silicon atom and represented by the formula: $-Si(R)_2-$, $-Si(OR)_2O-$, $-OSi(R)_2-$, or $-OSi(OR)_2-$(wherein R is a hydrocarbon group of 1 to 10 carbon atoms, preferably an alkyl group such as methyl or ethyl). A linkage containing two or more of the above groups and bonds is also available.

Examples of structures wherein the above-mentioned substituted or unsubstituted hydrocarbon group is bonded to the ring structure through the above linkage include an alkoxy group, an acyl group, an alkoxycarbonyl group, an aryloxycarbonyl group, an alkylcarbonyloxy group, an arylcarbonyloxy group, a triorganosilyl group and a triorganosiloxy group.
Specific examples of the alkoxy groups include methoxy and ethoxy; specific examples of the acyl groups include acetyl and benzoyl; specific examples of the alkylcarbonyloxy groups include acetoxy and propionyloxy; specific examples of the arylcarbonyloxy groups include benzoyloxy; specific examples of the alkoxycarbonyl groups include methoxycarbonyl and ethoxycarbonyl; specific examples of the aryloxycarbonyl groups include phenoxycarbonyl, naphthyloxycarbonyl, fluorenyloxycarbonyl and biphenylyloxycarbonyl; specific examples of the triorganosiloxy groups include trialkylsiloxy groups, such as trimethylsiloxy and triethylsiloxy, and trialkoxysiloxy groups, such as trimethoxysiloxy and triethoxysiloxy; and specific examples of the triorganosilyl groups include trialkylsilyl groups, such as trimethylsilyl and triethylsilyl, and trialkoxysilyl groups, such as trimethoxysilyl and triethoxysilyl.

Examples of the polar groups include a hydroxyl group, a cyano group, an amide group, an imino group (=NH), an amino group such as a primary amino group ($-NH_2$), a sulfonic acid group ($-SO_3H$), a sulfino group ($-SO_2H$) and a carboxyl group (-COOH).
The vinyl-based polymer (A) is preferably a polymer having repeating units represented by the following formulas (1).

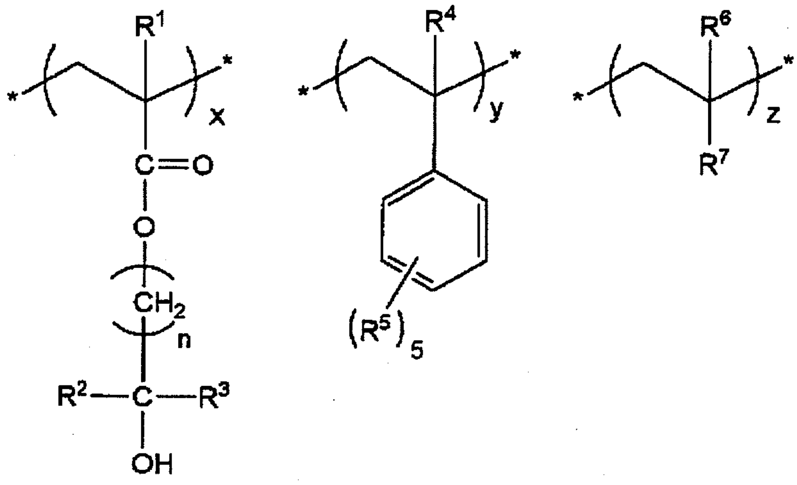

(1)

In the above formulas, $R^1$ to $R^7$ and n have the same meanings as those of $R^1$ to $R^7$ and n in the formulas (I) to (III). x, y and z are each a weight percent of the repeating unit based on x+y+z=100% by weight, and they preferably satisfy the conditions of $1<x<20$ and $80<y<99$.
It is more preferable that n is a number of $0 \leq n < 4$ and $R^1$ to $R^4$ are each a hydrogen atom or a methyl group, and it is particularly preferable that $R^1$ is a methyl group and $R^2$ to $R^4$ are each a hydrogen atom.
Such a vinyl-based polymer (A) can be obtained by copolymerizing a hydroxy (meth)acrylate monomer capable of becoming the structural unit represented by the above formula (I), an aromatic vinyl-based monomer capable of becoming the structural unit represented by the above formula (II) and a vinyl-based monomer capable of becoming the structural unit represented by the above formula (III).

Hydroxy (meth)acrylate monomer

Examples of the hydroxy (meth)acrylate monomers capable of becoming the structural unit represented by the formula (I) include 2-hydroxyethyl acrylate, 2-hydroxy-1-methylethyl acrylate, 2-hydroxy-n-propyl acrylate, 3-hydroxy-n-propyl acrylate, 4-hydroxybutyl acrylate, 2-hydroxybutyl acrylate, 3-chloro-2-hydroxypropyl acrylate, 2-hydroxy-3-phenoxypropyl acrylate, glycerol monoacrylate, 2-hydroxyethyl methacrylate, 2-hydroxy-1-methylethyl methacrylate, 2-hydroxy-n-propyl methacrylate, 3-hydroxy-n-propyl methacrylate, 4-hydroxybutyl methacrylate, 2-hydroxybutyl methacrylate, 3-chloro-2-hydroxypropyl methacrylate, 2-hydroxy-3-phenoxypropyl methacrylate and glycerol monomethacrylate. Of these, 2-hydroxy acrylate and 2-hydroxy methacrylate are preferably used because the vinyl-based polymer exhibits excellent compatibility with the cycloolefin-based resin.

Aromatic vinyl-based monomer

Examples of the aromatic vinyl-based monomers capable of becoming the structural unit represented by the formula (II) include styrene; alkyl substituted styrenes, such as α-methylstyrene, p-methylstyrene, m-methylstyrene and o-methylstyrene; halogen substituted styrenes, such as 4-chlorostyrene and 4-bromostyrene; chloromethylstyrene; hydroxystyrenes, such as p-hydroxystyrene, isopropenylphenol, 2-methyl-4-hydroxystyrene and 3,4-dihydroxystyrene; vinylbenzyl alcohols; alkoxy substituted styrenes, such as p-methoxystyrene, p-t-butoxystyrene and m-t-butoxystyrene; vinylbenzoic acids, such as 3-vinylbenzoic acid and 4-vinylbenzoic acid; vinylbenzoic esters, such as methyl 4-vinylbenzoate and ethyl 4-vinylbenzoate; 4-vinylbenzyl acetate; 4-acetoxystyrene; amidostyrenes, such as p-sulfonamidostyrene; aminostyrenes, such as 3-aminostyrene, 4-aminostyrene, 2-isopropenylaniline and vinylbenzyldimethylamine; nitrostyrenes, such as 3-nitrostyrene and 4-nitrostyrene; cyanostyrenes, such as 3-cyanostyrene and 4-cyanostyrene; vinylphenylacetonitrile; vinyl polycyclic aromatic compounds, such as 4-vinylbiphenyl, 3-vinylbiphenyl, 1-vinylnaphthalene, 2-vinylnaphthalene, 9-vinylfluorene, 2-vinylfluorene and 9-vinylanthracene; and 1,1-diphenylethylene. Of these, styrene and α-methylstyrene are preferable because they are industrially easily available and are inexpensive.

Vinyl-based monomer

Examples of the vinyl-based monomers capable of becoming the structural unit represented by the formula (III) include vinyl cyanides, such as acrylonitrile and methacrylonitrile; aliphatic alkyl acrylates, such as methyl acrylate, ethyl acrylate, isobornyl acrylate, cyclohexyl acrylate, dicyclopentanyl acrylate, 2-methoxyethyl acrylate and 3-methoxybutyl acrylate; benzyl acrylate; aromatic acrylates, such as phenyl acrylate; aliphatic alkyl methacrylates, such as methyl methacrylate, ethyl methacrylate, isobornyl methacrylate, cyclohexyl methacrylate and dicyclopentanyl methacrylate; benzyl methacrylate; aromatic methacrylates, such as phenyl methacrylate; acrylamides, such as acrylamide, N-isopropylacrylamide, N-isobutoxymethylacrylamide, N,N-dimethylacrylamide and N,N-diethylacrylamide; methacrylamides, such as methacrylamide, diethylaminoethyl methacrylate and dimethylaminoethyl methacrylate; glycidyl methacrylate; tetrahydrofurfuryl methacrylate; acrolein; methacrolein; and vinylpyridines, such as 2-vinylpyridine and 4-vinylpyridine. Of these, acrylonitrile, methyl acrylate, methyl methacrylate and dicyclopentanyl acrylate are preferably used because they are industrially easily available and are inexpensive, and acrylonitrile is particularly preferably used because the obtainable vinyl-based polymer has higher molecular weight.

Radical polymerization initiator

When the vinyl-based polymer (A) for use in the invention is synthesized by radical polymerization, a publicly known organic peroxide that generates free radicals or an azobis type radical polymerization initiator is employable. Examples of the organic peroxides include:

diacyl peroxides, such as diacetyl peroxide, dibenzoyl peroxide, diisobutyroyl peroxide, di(2,4-dichlorobenzoyl)peroxide, di(3,5,5-trimethylhexanoyl)peroxide, dioctanoyl peroxide, dilauroyl peroxide, distearoyl peroxide and bis{4-(m-toluoyl)benzoyl}peroxide;
ketone peroxides, such as methyl ethyl ketone peroxide, cyclohexanone peroxide, methylcyclohexanone peroxide and acetylacetone peroxide;
hydroperoxides, such as hydrogen peroxide, t-butyl hydroperoxide, α-cumene hydroperoxide, p-menthane hydroperoxide, diisopropylbenzene hydroperoxide, 1,1,3,3-tetramethylbutyl hydroperoxide and t-hexyl hydroperoxide;
dialkyl peroxides, such as di-t-butyl peroxide, dicumyl peroxide, dilauryl peroxide, α,α'-bis(t-butylperoxy)diisopropylbenzene, 2,5-dimethyl-2,5-bis(t-butylperoxy)hexane, t-butylcumyl peroxide and 2,5-dimethyl-2,5-bis(t-butylperoxy)-3-hexyne;
peroxy esters, such as t-butyl peroxyacetate, t-butyl peroxypivalate, t-hexyl peroxypivalate, 1,1,3,3-tetramethylbutyl peroxy-2-ethylhexanoate, 2,5-dimethyl-2,5-bis(2-ethylhexanoylperoxy)hexane, 1-cyclohexyl-1-methylethyl peroxy-2-ethylhexanoate, t-hexyl peroxy-2-ethylhexanoate, t-butyl peroxy-2-ethylhexanoate, t-butyl peroxyisobutyrate, t-butyl peroxymaleate, t-butyl peroxy-3,5,5-trimethylhexanoate, t-butyl peroxylaurate, 2,5-dimethyl-2,5-bis(m-toluoylperoxy)hexane, α,α'-bis(neodecanoylperoxy)diisopropylbenzene, cumyl peroxyneodecanoate, 1,1,3,3-tetramethylbutyl peroxyneodecanoate, 1-cyclohexyl-1-methylethyl peroxyneodecanoate, t-hexyl peroxyneodecanoate, t-butyl peroxyneododecanoate, t-butyl peroxybenzoate, t-hexyl peroxybenzoate, bis(t-butylperoxy)isophthalate, 2,5-dimethyl-2,5-bis(benzoylperoxy)hexane, t-butyl peroxy-m-toluoylbenzoate and 3,3',4,4'-tetra(t-butylperoxycarbonyl)benzophenone;
peroxy ketals, such as 1,1-bis(t-hexylperoxy)-3,3,5-trimethylcyclohexane, 1,1-bis(t-hexylperoxy)cyclohexane, 1,1-bis(t-butylperoxy)-3,3,5-trimethylcyclohexane, 1,1-bis(t-butylperoxy)cyclohexane, 1,1-bis(t-butylperoxy)cyclododecane, 2,2-bis(t-butylperoxy)butane, n-butyl 4,4-bis(t-butylperoxy)pivalate and 2,2-bis(4,4-di-t-butylperoxycyclohexyl)propane;
peroxy monocarbonates, such as t-hexyl peroxyisopropyl monocarbonate, t-butyl peroxyisopropyl monocarbonate, t-butyl peroxy-2-ethylhexyl monocarbonate and t-butyl peroxyallyl monocarbonate;
peroxy dicarbonates, such as di-sec-butyl peroxydicarbonate, di-n-propyl peroxydicarbonate, diisopropyl peroxydicarbonate, bis(4-t-butylcyclohexyl) peroxydicarbonate, di-2-ethoxyethyl peroxydicarbonate, di-2-ethylhexyl peroxydicarbonate, di-2-methoxybutyl peroxydicarbonate and di(3-methyl-3-methoxybutyl) peroxydicarbonate; and
other compounds, such as t-butyltrimethylsilyl peroxide.

The organic peroxides employable in the invention are not limited to the above-exemplified compounds.
Of the above organic peroxides, polyfunctional peroxy ketals are preferable because the polymer of high molecular weight can be easily obtained. In particular, tetrafunctional 2,2-bis(4,4-di-t-butylperoxycyclohexyl)propane is preferable.
Examples of the azobis type radical polymerization initiators include 2,2'-azobisisobutyronitrile, azobisisovaleronitrile, 2,2'-azobis(4-methoxy-2,4-dimethylvaleronitrile), 2,2'-azobis(2,4-dimethylvaleronitrile), 2,2'-azobis(2-methylbutyronitrile), 1,1'-azobis(cyclohexane-1-carbonitrile), 2-(carbamoylazo)isobutyronitrile, 2,2'-azobis[2-methyl-N-{1,1-bis(hydroxymethyl)-2-hydroxyethyl}propionamide], 2,2'-azobis[2-methyl-N-{2-(1-hydroxybutyl)}propionamide], 2,2'-azobis[2-methyl-N-(2-hydroxyethyl)-propionamide], 2,2'-azobis[N-(2-propenyl)-2-methylpropionamide], 2,2'-azobis(N-butyl-2-methylpropionamide), 2,2'-azobis(N-cyclohexyl-2-methylpropionamide), 2,2'-azobis[2-(5-methyl-2-imidazolin-2-yl)propane]dihydrochloride, 2,2'-azobis[2-(2-imidazolin-2-yl)propane]dihydrochloride, 2,2'-azobis[2-(2-imidazolin-2-yl)propane]disulfate·dihydrate, 2,2'-azobis[2-(3,4,5,6-tetrahydropyrimidin-2-yl)propane]dihydrochloride, 2,2'-azobis[2-{1-(2-hydroxyethyl)-2-imidazolin-2-yl}propane]dihydrochloride, 2,2'-azobis[2-(2-imidazolin-2-yl)propane], 2,2'-azobis(2-methylpropionamidine)dihydrochloride, 2,2'-azobis[N-(2-carboxyethyl)-2-methyl-propionamidine], 2,2'-azobis(2-methylpropionamidoxime), dimethyl 2,2'-azobisbutyrate, 4,4'-azobis(4-cyanopentanoic acid) and 2,2'-azobis(2,4,4-trimethylpentane). The azobis type radical polymerization initiators employable in the invention are not limited to the above compounds. Of the above azobis type radical polymerization initiators, 2,2'-azobisisobutyronitrile, 2,2'-azobis(2,4-dimethylvaleronitrile) and 1,1'-azobis(cyclohexane-1-carbonitrile) are particularly preferable because the obtainable polymer has high molecular weight.

Catalyst

In the copolymerization reaction of the hydroxy (meth)acrylate monomer with, if necessary, the aromatic vinyl-based monomer and/or the vinyl-based monomer, a catalyst may be used. This catalyst is not specifically restricted, and for example, an anionic polymerization catalyst, a coordination anionic polymerization catalyst and a cationic polymerization catalyst which are publicly known are employable.

Vinyl-based polymer (A)

The vinyl-based polymer (A) for use in the invention is obtained by polymerizing the hydroxy (meth)acrylate monomer, the aromatic vinyl-based monomer and the vinyl-based monomer in the presence of the polymerization initiator and the catalyst by a heretofore known process, such as bulk polymerization, solution polymerization, precipitation polymerization, emulsion polymerization, suspension polymerization or bulk-suspension polymerization.

It is desirable that in the vinyl-based polymer (A) obtained as above, the structural units represented by the formula (I) are contained in a proportion (corresponding to x in the aforesaid formula (1)) of usually more than 1% by weight and not more than 20% by weight, preferably 2 to 10% by weight, and the structural units represented by the formula (II) are contained in a proportion (corresponding to y in the aforesaid formula (1)) of usually more than 80% by weight and less than 99% by weight, preferably 90 to 98% by weight, based on the total 100% by weight of the structural units represented by the formula (I), the structural units represented by the formula (II) and the structural units represented by the formula (III). When the proportion of the structural units represented by the formula (I) is in the above range, the vinyl-based polymer (A) and the cycloolefin-based polymer (B) are favorably compatibilized, and the resulting thermoplastic resin composition and the resulting optical film exhibit excellent property of low birefringence and are enhanced in the weathering resistance and the heat resistance.

The vinyl-based polymer (A) desirably has a number-average molecular weight (Mn), as measured by gel permeation chromatography (GPC) in terms of polystyrene, of usually 1,000 to 500,000, preferably 2,500 to 300,000, more preferably 5,000 to 150,000, and a weight-average molecular weight (Mw) of usually 5,000 to 800,000, preferably 10,000 to 500,000, more preferably 20,000 to 250,000.

If the molecular weight is too low, the strength of the resulting molded article or the resulting film is sometimes lowered. If the molecular weight is too high, the solution viscosity becomes too high, and hence, productivity or processability of the thermoplastic resin composition of the invention is sometimes deteriorated.

The vinyl-based polymer (A) desirably has a molecular weight distribution (Mw/Mn) of usually 1.0 to 10, preferably 1.2 to 5, more preferably 1.2 to 3.

(B) Cycloolefin-based polymer

As the cycloolefin-based polymer (B) for use in the invention, there can be mentioned the following polymers (i) to (v):

(i) a ring-opened polymer of a monomer represented by the following formula (2) (also referred to as the "specific monomer" hereinafter),

(ii) a ring-opened copolymer of the specific monomer and a copolymerizable monomer,

(iii) a hydrogenated polymer of the ring-opened polymer (i) or (ii),

(iv) a polymer obtained by cyclizing the ring-opened polymer (i) or (ii) by Friedel-Crafts reaction and then hydrogenating the reaction product, and

(v) a saturated copolymer of the specific monomer and an unsaturated double bond-containing compound.

Of the above polymers, the hydrogenation product (iii) of the ring-opened polymer is preferable.

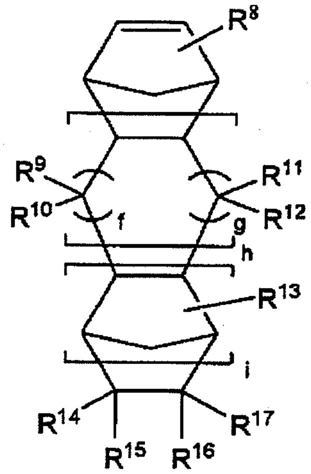

(2)

In the above formula, f and g are each independently 0 or 1 with the proviso that at least one of them is 1, h and i are each independently an integer of 0 to 2, $R^8$ to $R^{17}$ are each independently an atom or a group selected from the group consisting of a hydrogen atom, a halogen atom, a substituted or unsubstituted hydrocarbon group of 1 to 30 carbon atoms which may have a linkage containing an oxygen atom, a nitrogen atom, a sulfur atom or a silicon atom, and a polar group, $R^{14}$ and $R^{15}$, and/or $R^{16}$ and $R^{17}$ may be united to form a hydrocarbon group, and $R^{14}$ or $R^{15}$ and $R^{16}$ or $R^{17}$ may be bonded to each other to form a carbon ring or a heterocyclic ring (said carbon ring or said heterocyclic ring may have a monocyclic structure or may be condensed with another ring to form a polycyclic structure).

As the atom or the group selected from the group consisting of a halogen atom, a substituted or unsubstituted hydrocarbon group of 1 to 30 carbon atoms which may have a linkage containing an oxygen atom, a nitrogen atom, a sulfur atom or a silicon atom, and a polar group, there can be mentioned the same atoms or groups as described for $R^1$ to $R^7$ in the formulas (I) to (III).

The cycloolefin-based polymer (B) preferably has a polar group from the viewpoint of compatibility with the vinyl-based polymer (A).

Examples of the specific monomers represented by the formula (2) include the following compounds:

bicyclo[2.2.1]hept-2-ene,
tricyclo[4.3.0.$1^{2,5}$]-3-decene,
tricyclo[4.4.0.$1^{2,5}$]-3-undecene,
7-methyltricyclo[4.4.0.$1^{2,5}$]-3-undecene,
tetracyclo[4.4.0.$1^{2,5}$.$1^{7,10}$]-3-dodecene,
2,10-dimethyltetracyclo[4.4. 0. $1^{2,5}$. $1^{7,10}$]-3-dodecene,
pentacyclo[6.5.1.$1^{3,6}$.$0^{2,7}$.$0^{9,13}$]-4-pentadecene,
pentacyclo[7.4.0.$1^{2,5}$. $1^{9,12}$.$0^{8,13}$]-3-pentadecene,
5-methylbicyclo[2.2.1]hept-2-ene,
1-methylbicyclo[2.2.1]hept-2-ene,
7-methylbicyclo[2.2.1]hept-2-ene,
5-ethylbicyclo[2.2.1]hept-2-ene,
5-methoxycarbonylbicyclo[2.2.1]hept-2-ene,
5-methyl-5-methoxycarbonylbicyclo[2.2.1]hept-2-ene,
5-ethoxycarbonylbicyclo[2.2.1]hept-2-ene,
5-methyl-5-ethoxycarbonylbicyclo[2.2.1]hept-2-ene,
5-phenoxycarbonylbicyclo[2.2.1]hept-2-ene,
5-methyl-5-phenoxycarbonylbicyclo[2.2.1]hept-2-ene,
5-cyanobicyclo[2.2.1]hept-2-ene,
8-methoxycarbonyltetracyclo[4.4.0.$1^{2,5}$.$1^{7,10}$]-3-dodecene,
8-ethoxycarbonyltetracyclo[4.4.0.$1^{2,5}$.$1^{7,10}$]-3-dodecene,

8-n-propoxycarbonyltetracyclo[4.4.0.$1^{2,5}$.$1^{7,10}$]-3-dodecene,
8-isopropoxycarbonyltetracyclo[4.4.0.$1^{2,5}$.$1^{7,10}$]-3-dodecene,
8-n-butoxycarbonyltetracyclo[4.4.0.$1^{2,5}$.$1^{7,10}$]-3-dodecene,
8-phenoxycarbonyltetracyclo[4.4.0.$1^{2,5}$.$1^{7,10}$]-3-dodecene,
8- (1-naphthoxy) carbonyltetracyclo[4.4.0.$1^{2,5}$.$1^{7,10}$]-3-dodecene,
8-(2-naphthoxy)carbonyltetracyclo[4.4.0.$1^{2,5}$.$1^{7.10}$]-3-dodecene,
8-(4-phenylphenoxy)carbonyltetracyclo[4.4.0.$1^{2,5}$.$1^{7,10}$]-3-dodecene,
8-methyl-8-methoxycarbonyltetracyclo[4.4.0.$1^{2,5}$.$1^{7,10}$]-3-dodecene,
8-methyl-8-ethoxycarbonyltetracyclo[4.4.0.$1^{2,5}$.$1^{7,10}$]-3-dodecene,
8-methyl-8-n-propoxycarbonyltetracyclo[4.4.0.$1^{2,5}$, $1^{7,10}$]-3-dodecene,
8-methyl-8-isopropoxycarbonyltetracyclo[4.4.0.$1^{2,5}$.$1^{7,10}$]-3-dodecene,
8-methyl-8-n-butoxycarbonyltetracyclo[4.4.0.$1^{2,5}$.$1^{7,10}$]-3-dodecene,
8-methyl-8-phenoxycarbonyltetracyclo[4.4.0.$1^{2,5}$.$1^{7,10}$]-3-dodecene,
8-methyl-8-(1-naphthoxy)carbonyltetracyclo[4.4.0.$1^{2,5}$.$1^{7,10}$]-3-dodecene,
8-methyl-8-(2-naphthoxy)carbonyltetracyclo[4.4.0.$1^{2,5}$.$1^{7,10}$]-3-dodecene,
8-methyl-8-(4-phenylphenoxy) carbonyltetracyclo[4.4.0,$1^{2,5}$.$1^{7,10}$]-3-dodecene,
pentacyclo[8.4.0.$1^{2,5}$.$1^{9,12}$. $0^{8}$,$^{13}$]-3-hexadecene,
heptacyclo[8.7.0.$1^{3,6}$.$1^{10,17}$.$1^{12,15}$.$0^{2,7}$.$0^{11,16}$]-4-eicosene,
heptacyclo[8.8.0.$1^{4,7}$.$1^{11,18}$.$1^{13,16}$.$0^{3,8}$.$0^{12,17}$]-5-heneicosene,
8-ethylidenetetracyclo[4.4.0.$1^{2,5}$.$1^{7,10}$]-3-dodecene,
5-phenylbicyclo[2.2.1]hept-2-ene,
5-phenyl-5-methylbicyclo[2.2.1]hept-2-ene,
8-phenyltetracyclo[4.4.0.$1^{2,5}$.$1^{7,10}$]-3-dodecene,
8-phenyl-8-methyltetracyclo[4.4.0.$1^{2,5}$.$1^{7,10}$]-3-dodecene,
5-n-butylbicyclo[2.2.1]hept-2-ene,
5-n-hexylbicyclo[2.2.1]hept-2-ene,
5-cyclohexylbicyclo[2.2.1]hept-2-ene,
5-(3-cyclohexenyl)bicyclo[2.2.1]hept-2-ene,
5-n-octylbicyclo[2.2.1]hept-2-ene,
5-n-decylbicyclo[2.2.1]hept-2-ene,
5-isopropylbicyclo[2.2.1]hept-2-ene,
5-(1-naphthyl)bicyclo[2.2.1]hept-2-ene,
5-(1-naphthyl)-5-methylbicyclo[2.2.1]hept-2-ene,
5-(2-naphthyl)bicyclo[2.2.1]hept-2-ene,
5-(2-naphthyl)-5-methylbicyclo[2.2.1]hept-2-ene,
5-(biphenyl-4-yl)bicyclo[2.2.1]hept-2-ene,
5-(biphenyl-4-yl)-5-methylbicyclo[2.2.1]hept-2-ene,
5-aminomethylbicyclo[2.2.1]hept-2-ene,
5-trimethoxysilylbicyclo[2.2.1]hept-2-ene,
5-triethoxysilylbicyclo[2.2.1]hept-2-ene,
5-tri-n-propoxysilylbicyclo[2.2.1]hept-2-ene;
5-tri-n-butoxysilylbicyclo[2.2.1]hept-2-ene,
5-chloromethylbicyclo[2.2.1]hept-2-ene,
5-hydroxymethylbicyclo[2.2.1]hept-2-ene,
5-cyclohexenylbicyclo[2.2.1]hept-2-ene,
5-fluorobicyclo[2.2.1]hept-2-ene,
5-fluoromethylbicyclo[2.2.1]hept-2-ene,
5-trifluoromethylbicyclo[2.2.1]hept-2-ene,
5,5-difluorobicyclo[2.2.1]hept-2-ene,
5,6-difluorobicyclo[2.2.1]hept-2-ene,
5,5-bis(trifluoromethyl)bicyclo[2.2.1]hept-2-ene,
5,6-bis(trifluoromethyl)bicyclo[2.2.1]hept-2-ene,
5-methyl-5-trifluoromethylbicyclo[2.2.1]hept-2-ene,
5,5,6-trifluorobicyclo[2.2.1]hept-2-ene,
5,5,6,6-tetrafluorobicyclo[2.2.1]hept-2-ene,
8-fluorotetracyclo[4.4.0.$1^{2,5}$.$1^{7,10}$]-3-dodecene,
8-fluoromethyltetracyclo[4.4.0.$1^{2,5}$.$1^{7,10}$]-3-dodecene,
8-trifluoromethyltetracyclo[4.4.0.$1^{2,5}$.$1^{7,10}$]-3-dodecene,

8,8-difluorotetracyclo[4.4.0.$1^{2,5}$.$1^{7,10}$]-3-dodecene,
8,9-difluorotetracyclo[4.4.0.$1^{2,5}$.$1^{7,10}$]-3-dodecene,
8,8-bis(trifluoromethyl)tetracyclo[4.4.0.$1^{2,5}$.$1^{7,10}$]-3-dodecene,
8,9-bis(trifluoromethyl)tetracyclo[4.4.0.$1^{2,5}$.$1^{7,10}$]-3-dodecene,
8,8,9-trifluorotetracyclo[4.4.0.$1^{2,5}$.$1^{7,10}$] -3-dodecene, and
8,8,9,9-tetrafluorotetracyclo[4.4. 0.$1^{2,5}$.$1^{7,10}$]-3-dodecene.

The above compounds can be used singly or in combination of two or more kinds.
Of the above specific monomers, the specific monomer wherein at least one of $R^{14}$ to $R^{17}$ in the formula (2) is a specific polar group represented by the following formula (a) is preferably used from the viewpoint that the obtainable cycloolefin-based polymer exhibits excellent compatibility with the vinyl-based polymer.

$$-(CH_2)_pCOOR^{18} \qquad \text{(a)}$$

wherein p is usually an integer of 0 to 10, and $R^{18}$ is a hydrocarbon group of 1 to 20 carbon atoms.
The value of p and the number of carbon atoms of $R^{18}$ in the formula (a) are preferably as small as possible, because as the value of p becomes smaller or the number of carbon atoms of $R^{18}$ becomes smaller, the resulting thermoplastic resin composition has a higher glass transition temperature and is more improved in the heat resistance. That is to say, although p is usually an integer of 0 to 10, it is preferably 0 or 1, and although $R^{18}$ is usually a hydrocarbon group of 1 to 20 carbon atoms, it is preferably an alkyl group of 1 to 3 carbon atoms.
Further, the specific monomer of the formula (2) wherein an alkyl group is further bonded to a carbon atom to which the polar group represented by the formula (a) is bonded is preferable from the viewpoint that the resulting thermoplastic resin composition and optical film keep good balance between the heat resistance and the moisture (water) resistance. The number of carbon atoms of this alkyl group is preferably 1 to 5, more preferably 1 to 2, particularly preferably 1.
Of such specific monomers, 8-methyl-8-methoxycarbonyltetracyclo[4.4.0.$1^{2,5}$.$1^{7,10}$]-3-dodecene and 5-methyl-5-methoxycarbonyl-bicyclo[2.2.1]hept-2-ene are preferable because they are relatively easily produced and the resulting thermoplastic resin composition and optical film are excellent in heat resistance and weathering resistance.
The cycloolefin-based polymer obtained by ring-opening polymerization of the specific monomer is, for example, a polymer having a structural unit represented by the following formula (3):
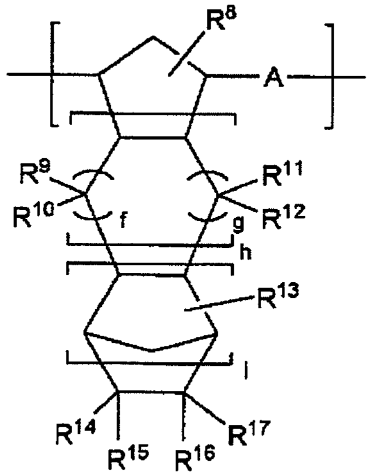

(3)

wherein f, g, h, i and $R^8$ to $R^{17}$ have the same meanings as those of f, g, h, i and $R^8$ to $R^{17}$ in the formula (2), A is a group represented by the formula -CH=CH- or a group represented by the formula $-CH_2CH_2-$, and plural A may be the same or different.
In the present invention, the cycloolefin-based polymer is preferably a polymer containing a structural unit of the formula (3) in which h is 0, i is 0 or 1, and at least one of $R^{14}$ to $R^{17}$ is a group represented by the formula $-(CH_2)_pCOOR^{18}$ (wherein $R^{18}$ is a hydrocarbon group of 1 to 20 carbon atoms, and p is an integer of 0 to 10).

Copolymerizable monomer

Although the specific monomer may be ring-opening polymerized alone, the specific monomer and another copolymerizable monomer may be ring-opening copolymerized.
Examples of the copolymerizable monomers include cycloolefins, such as cyclobutene, cyclopentene, cycloheptene, cyclooctene, 5-ethylidene-2-norbornene and dicyclopentadiene. The number of carbon atoms of the cycloolefin is in the range of preferably 4 to 20, more preferably 5 to 12. The copolymerizable monomers can be used singly or in combination of two or more kinds.
Ring-opening polymerization of the specific monomer may be carried out in the presence of an unhydrogenated polymer (i.e., polymer having not been subjected to hydrogenation) of polybutadiene, polyisoprene, a styrene/butadiene copolymer, an ethylene/non-conjugated diene polymer or a ring-opened polymer of a norbornene-based monomer. In this case, the resulting ring-opened copolymer and its hydrogenated copolymer are each useful in the invention because the obtainable thermoplastic resin composition shows high impact resistance.
The polymerization conditions in the process for preparing the cycloolefin-based ring-opened polymer of the invention are further described below.

Ring-opening polymerization catalyst

As a catalyst for use in the ring-opening polymerization (also referred to as the "ring-opening polymerization catalyst" hereinafter) used in the invention, a metathesis catalyst can be mentioned. As the metathesis catalyst, for example, (I) a catalyst described in "Olefin Metathesis and Metathesis Polymerization" (K.J. IVIN, J.C. MOL, Academic Press, 1997) is preferably used. Such a catalyst is, for example, a metathesis catalyst comprising a combination of (a) at least one compound selected from compounds of W, Mo, Re, V and Ti and (b) at least one compound selected from compounds containing alkali metal elements (e.g., Li, Na, K), alkaline earth metal elements (e.g., Mg, Ca), Group 12 elements of Deming's periodic table (e.g., Zn, Cd, Hg), Group 13 elements thereof (e.g., B, Al) or Group 14 elements thereof (e.g., Si, Sn, Pb) and having at least one bond of the element and carbon or hydrogen. In order to enhance catalytic activity, the later-described additive (c) may be added to the above catalyst.
Examples of the components (a) include compounds described in Japanese Patent Laid-Open Publication No. 240517/1989, such as $WCl_6$, $MoCl_5$, $ReOCl_3$, $VOCl_3$ and $TiCl_4$. These compounds can be used singly or in combination of two or more kinds.
Examples of the components (b) include compounds described in Japanese Patent Laid-Open Publication No. 240517/1989, such as n-$C_4H_9Li$, $(C_2H_5)_3Al$, $(C_2H_5)_2AlCl$, $(C_2H_5)_{1.5}AlCl_{1.5}$, $(C_2H_5)AlCl_2$, methylalumoxane (MAO) and LiH. These compounds can be used singly or in combination of two or more kinds.
As the additives (components (c)), alcohols, aldehydes, ketones, amines and the like can be preferably used. Further, compounds described in Japanese Patent Laid-Open Publication No. 240517/1989 can be also used. These compounds can be used singly or in combination of two or more kinds.
The metathesis catalyst comprising the above combination containing the component (a) is used in such an amount that the molar ratio between the component (a) and all the monomers (specific monomer and other copolymerizable monomers, the same shall apply hereinafter) (compound (a):all the monomers) becomes usually 1:500 to 1:500,000, preferably 1:1,000 to 1:100,000. The molar ratio between the component (a) and the component (b) ((a) : (b)) is in the range of usually 1:1 to 1:50, preferably 1:2 to 1:30, in terms of a metal atom ratio. When the additive (c) is added to the metathesis catalyst, the molar ratio between the component (c) and the component (a) ((c):(a)) is in the range of usually 0.005:1 to 15:1, preferably 0.05:1 to 7:1.
As another catalyst, (II) a metathesis catalyst comprising a periodic table Group 4 to Group 8 transition metal-carbene complex or metallocyclobutane complex is employable. For example, metathesis catalysts described in publicly known literatures, such as T.M. Trnka et al., Acc. Chem. Res. 2001, 34, 18-29, and R.R. Schrock, Chem. Rev. 2002, 102, 145-179, are preferably used. Examples of the catalysts (II) include W(=N-2,6-$C_6H_3{}^iPr_2$) (=$CH^tBu$) ($O^tBu)_2$, Mo (=N-2, 6-$C_6H_3{}^iPr_2$) (=$CH^tBu$) ($O^tBu)_2$, Ru (=CHCH=$CPh_2$) $(PPh_3)_2Cl_2$ and Ru(=CHPh)$(PC_6H_{11})_2Cl_2$. These catalysts can be used singly or in combination of two or more kinds.
The catalyst (II) is used in such an amount that the molar ratio between the catalyst (II) and all the monomers (catalyst (II):all the monomers) becomes usually 1:50 to 1:50,000, preferably 1:100 to 1:10,000. The catalyst (I) and the catalyst (II) may be used in combination.

Molecular weight modifier

The molecular weight of the ring-opened polymer can be controlled by the polymerization temperature, the type of the catalyst and the type of a solvent. In the present invention, however, control of the molecular weight is preferably carried out by allowing a molecular weight modifier to coexist in the reaction system. Examples of the molecular

weight modifiers include α-olefins, such as ethylene, propene, 1-butene, 1-pentene, 1-hexene, 1-heptene, 1-octene, 1-nonene and 1-decene; and vinyl aromatic compounds, such as styrene, 4-vinylbiphenyl, 1-vinylnaphthalene and 2-vinylnaphthalene. Of these, 1-butene and 1-hexene are particularly preferable. These molecular weight modifiers can be used singly or as a mixture of two or more kinds. The molecular weight modifier is used in an amount of usually 0.005 to 0.6 mol, preferably 0.02 to 0.5 mol, based on 1 mol of all the monomers used in the ring-opening polymerization.

Ring-opening polymerization solvent

In the ring-opening polymerization, a solvent is preferably used in order to dissolve the specific monomer, the ring-opening polymerization catalyst and the molecular weight modifier. Examples of the solvents for use in the ring-opening polymerization include alkanes, such as pentane, hexane, heptane, octane, nonane and decane; cycloalkanes, such as cyclohexane, cycloheptane, cyclooctane, decalin and norbornane; aromatic hydrocarbons, such as benzene, toluene, xylene, ethylbenzene and cumene; halogenated alkanes, such as chlorobutane, bromohexane, methylene chloride, dichloroethane, hexamethylene dibromide, chloroform and tetrachloroethylene; halogenated aryls, such as chlorobenzene; saturated carboxylic esters, such as ethyl acetate, n-butyl acetate, isobutyl acetate and methyl propionate; and ethers, such as dimethoxyethane, dibutyl ether and tetrahydrofuran. These solvents can be used singly or as a mixture of two or more kinds. Of these, the aromatic hydrocarbons are preferable. The solvent is used in such an amount that the ratio between the solvent and all the monomers (solvent:all the monomers, by weight) becomes usually 1:1 to 10:1, preferably 1:1 to 5:1.

Ring-opening polymerization reaction

The ring-opened polymer can be obtained by known ring-opening polymerization of the specific monomer, and if necessary, the copolymerizable monomer, in the presence of the ring-opening polymerization catalyst and using the molecular weight modifier and the ring-opening polymerization solvent, if necessary.
In the case where the specific monomer and the copolymerizable monomer are copolymerized, it is desirable to copolymerize the specific monomer in an amount of usually not less than 50% by weight and less than 100% by weight, preferably not less than 60% by weight and less than 100% by weight, more preferably not less than 70% by weight and less than 100% by weight, and the copolymerizable monomer in an amount of usually more than 0% by weight and not more than 50% by weight, preferably more than 0% by weight and not more than 40% by weight, more preferably more than 0% by weight and not more than 30% by weight, based on the total 100% by weight of the specific monomer and the copolymerizable monomer.
As the ring-opened polymer for use in the invention, a homopolymer of the specific monomer or a copolymer of two or more kinds of the specific monomers is most preferable.

Hydrogenation reaction

Although the ring-opened polymer obtained by the above ring-opening polymerization reaction can be used as it is as the cycloolefin-based polymer (B), this ring-opened polymer has an olefinic unsaturated bond in the molecule, and a problem of coloring by heating or the like sometimes takes place. On this account, it is preferable to use a hydrogenated polymer obtained by hydrogenating the olefinic unsaturated bond.
If an aromatic group is present in the specific monomer, the hydrogenation reaction needs to be carried out under such conditions that the conjugated double bond in the ring of the aromatic ring skeleton is not substantially hydrogenated. For example, the hydrogenation reaction can be carried out by adding a hydrogenation catalyst to a solution of the ring-opened polymer and then adding a hydrogen gas of atmospheric pressure to 30 MPa, preferably 3 to 20 MPa, to react them at usually 0 to 220°C, preferably 20 to 200°C.
As the hydrogenation catalyst, a catalyst that is used for usual hydrogenation reaction of an olefinic compound, such as a publicly known heterogeneous or homogeneous catalyst, is employable. Examples of the heterogeneous catalysts include solid catalysts wherein precious metal catalytic substances, such as palladium, platinum, nickel, rhodium and ruthenium, are supported on carriers, such as carbon, silica, alumina and titania. Examples of the homogeneous catalysts include nickel naphthenate/triethylaluminum, nickel acetylacetonate/triethylaluminum, cobalt octenate/n-butyllithium, titanocene dichloride/diethylaluminum monochloride, rhodium acetate, chlorotris(triphenylphosphine)rhodium, dichlorotris(triphenylphosphine)ruthenium, chlorohydrocarbonyltris(triphenylphosphine)ruthenium and dichlorocarbonyltris(triphenylphosphine)ruthenium. Such catalysts may be in the form of powders or particles. These hydrogenation catalysts can be used singly or in combination of two or more kinds. The hydrogenation catalyst is used in such an amount that the ratio (by weight) between the ring-opened polymer and the hydrogenation catalyst (ring-opened polymer: catalyst) becomes usually $1:1\times10^{-6}$ to 1:2.
The degree of hydrogenation of the olefinic unsaturated bonds (the proportion in which A in the formula (3) is

converted into a group represented by the formula - $CH_2CH_2$-) is usually not less than 50%, preferably not less than 70%, more preferably not less than 90%. As the degree of hydrogenation is increased, occurrence of coloring or deterioration of the cycloolefin-based polymer under high-temperature conditions is inhibited, so that the degree of hydrogenation is preferably high.

By hydrogenating the ring-opened polymer in the above manner, the resulting hydrogenated polymer has excellent heat stability, and deterioration of properties of the polymer caused by heating in the molding process or in the use of the manufactured article can be prevented.

Saturated copolymer

In the present invention, in addition to the ring-opened polymer and its hydrogenated polymer, a saturated copolymer of the specific monomer and an unsaturated double bond-containing compound can be also used as the cycloolefin-based polymer (B). It is desirable to copolymerize the specific monomer in an amount of usually 60 to 90% by weight, preferably 70 to 90% by weight, more preferably 80 to 90% by weight, and the unsaturated double bond-containing compound in an amount of usually 10 to 40% by weight, preferably 10 to 30% by weight, more preferably 10 to 20% by weight, based on the total 100% by weight of the specific monomer and the unsaturated double bond-containing compound.

Examples of the unsaturated double bond-containing compounds include compounds of olefins of 2 to 12 carbon atoms, preferably 2 to 8 carbon atoms, such as ethylene, propylene and butene.

As a catalyst for use in the copolymerization reaction of the specific monomer with the unsaturated double bond-containing compound, a catalyst comprising a vanadium compound and an organoaluminum compound can be mentioned. The vanadium compound is, for example, a vanadium compound represented by the formula $VO(OR)_aX_b$ or $V(OR)_cX_d$ (wherein R is a hydrocarbon group, $0 \leq a \leq 3$, $0 \leq b \leq 3$, $2 \leq a+b \leq 3$, $0 \leq c \leq 4$, $0 \leq d \leq 4$ and $3 \leq c+d \leq 4$) or an electron donor adduct thereof. Examples of the electron donors include oxygen-containing electron donors, such as alcohol, phenols, ketone, aldehyde, carboxylic acid, ester of organic acid or inorganic acid, ether, acid amide, acid anhydride and alkoxysilane; and nitrogen-containing electron donors, such as ammonia, amine, nitrile and isocyanate. The organoaluminum compound is, for example, at least one organoaluminum compound selected from compounds having at least one aluminum-carbon bond or aluminum-hydrogen bond. The proportion of the organoaluminum compound to the vanadium compound in the catalyst is as follows. That is to say, the ratio of the aluminum atom to the vanadium atom (Al/V) is usually not less than 2, preferably 2 to 50, particularly preferably 3 to 20.

Examples of solvents employable in the above copolymerization reaction include alkanes, such as pentane, hexane, heptane, octane, nonane and decane; cycloalkanes, such as cyclohexane and methylcyclohexane; and aromatic hydrocarbons and halogen derivatives thereof, such as benzene, toluene and xylene. Of these, cyclohexane is preferable.

Cycloolefin-based polymer (B)

The cycloolefin-based polymer (B) for use in the invention desirably has an intrinsic viscosity [η], as measured in a chlorobenzene solution (concentration: 0.5 g/100 ml) at 30°C, of 0.2 to 5.0 dl/g, preferably 0.3 to 4.0 dl/g, more preferably 0.35 to 1.5 dl/g. Further, the cycloolefin-based polymer (B) desirably has a number-average molecular weight (Mn) in terms of polystyrene, as measured by gel permeation chromatography (GPC), of usually 1,000 to 1,000,000, preferably 3,000 to 500,000, more preferably 5,000 to 250,000, and a weight-average molecular weight (Mw) of usually 10,000 to 2,000,000, preferably 20,000 to 1,000,000, more preferably 30,000 to 500,000.

If the molecular weight is too low, the strength of the resulting molded article or the resulting film is sometimes lowered. If the molecular weight is too high, the solution viscosity becomes too high, and hence, productivity or processability of the thermoplastic resin composition of the invention is sometimes deteriorated.

The cycloolefin-based polymer (B) desirably has a molecular weight distribution (Mw/Mn) of usually 1.5 to 10, preferably 2 to 8, more preferably 2.2 to 5.

The cycloolefin-based polymer (B) has a glass transition temperature (Tg) of usually 110 to 250°C, preferably 115 to 220°C, more preferably 120 to 200°C. If Tg is too low, the heat distortion temperature is lowered, so that a problem of heat resistance is liable to occur, and besides, there sometimes occurs a problem that optical properties of the resulting molded article or the resulting film greatly change with temperature. On the other hand, if Tg is too high, the processing temperature needs to be raised, and thereby, the thermoplastic resin composition sometimes suffers heat deterioration.

Thermoplastic resin composition and optical film

In the thermoplastic resin composition and the optical film of the invention, the vinyl-based polymer (A) and the cycloolefin-based polymer (B) are contained in the following proportions. That is to say, based on 100 parts by weight of the cycloolefin-based polymer (B), the vinyl-based polymer (A) is contained in an amount of usually 0.01 to 300 parts

by weight, preferably 10 to 300 parts by weight, more preferably 40 to 150 parts by weight. When the amount of the vinyl-based polymer (A) is in the above range, the thermoplastic resin composition and the optical film have low birefringence and exhibit excellent weathering resistance and heat resistance. If the amount of the vinyl-based polymer (A) is less than the lower limit of the above range, the birefringence value of the resulting thermoplastic resin composition and optical film is not sufficiently decreased occasionally. If the amount of the vinyl-based polymer (A) exceeds the upper limit of the above range, heat resistance of the resulting thermoplastic resin composition and optical film is sometimes lowered, and transparency of the optical film is sometimes lowered.

In the case where a retardation film is formed from the optical film, the thermoplastic resin composition desirably contains the vinyl-based polymer (A) in an amount of preferably 10 to 100 parts by weight, more preferably 15 to 75 parts by weight, particularly preferably 20 to 65 parts by weight, based on 100 parts by weight of the cycloolefin-based polymer (B). When such a thermoplastic resin composition is used, the obtainable retardation film exhibits excellent development of retardation.

On the other hand, in the case where the thermoplastic resin composition is applied to an injection molded article, the amount of the vinyl-based polymer (A) based on 100 parts by weight of the cycloolefin-based polymer (B) is in the range of preferably 10 to 300 parts by weight, more preferably 30 to 150 parts by weight, particularly preferably 40 to 100 parts by weight.

The thermoplastic resin composition and the optical film may further contain a hydrocarbon resin. Examples of the hydrocarbon resins include $C_5$-based resins, $C_9$-based resins, $C_5$-based/$C_9$-based mixture resins, cyclopentadiene-based resins, olefin/vinyl substituted aromatic compound copolymer-based resins, cyclopentadiene compound/vinyl substituted aromatic compound copolymer-based resins, hydrogenation products of these resins, and hydrogenation products of vinyl substituted aromatic resins. The content of the hydrocarbon resin is in the range of usually 0.01 to 50 parts by weight, preferably 0.1 to 25 parts by weight, based on 100 parts by weight of the cycloolefin-based polymer (B).

In order to improve heat deterioration resistance and light resistance, publicly known phenol-based or hydroquinone-based antioxidants, such as 2,6-di-t-butyl-4-methylphenol, 2,2'-dioxy-3,3'-di-t-butyl-5,5'-dimethyldiphenylmethane, tetrakis[methylene-3-(3,5-di-t-butyl-4-hydroxyphenyl)propionato]methane, stearyl-β-(3,5-dit-butyl-4-hydroxyphenyl) propionate and 1,3,5-trimethyl-2,4,6-tris(3,5-di-t-butyl-4-hydroxybenzyl)benzene; and publicly known phosphorus-based antioxidants, such as tris(4-methoxy-3,5-diphenyl) phosphite, tris(nonylphenyl) phosphite and tris(2,4-di-t-butylphenyl) phosphite, can be contained in the thermoplastic resin composition and the optical film. These antioxidants can be contained singly or in combination of two or more kinds. Further, in order to improve light resistance, publicly known ultraviolet light absorbers, such as 2,4-dihydroxybenzophenone, 2-hydroxy-4-methoxybenzophenone and 2,2'-methylenebis[4-(1,1,3,3-tetramethylbutyl)-6-[(2H-benzotriazol-2-yl)phenol]], may be contained in the thermoplastic resin composition and the optical film. Moreover, a lubricant to improve processability may be contained, and if necessary, publicly known additives, such as flame retardant, anti-fungus agent, colorant, mold-releasing agent and foaming agent, may be contained. These additives can be used singly or in combination of two or more kinds.

Process for preparing thermoplastic resin composition

The thermoplastic resin composition of the invention can be prepared by, for example, the following processes:

(i) a process comprising mixing the vinyl-based polymer (A), the cycloolefin-based polymer (B) and arbitrary components by the use of a twin-screw extruder, a roll kneading machine or the like, and
(ii) a process comprising adding the vinyl-based polymer (A) to a solution of the cycloolefin-based polymer (B) in an appropriate solvent and mixing them.

Process for producing optical film

The optical film of the invention can be produced by, for example, molding or forming the thermoplastic resin composition into a film by a publicly known method, such as injection molding, compression molding or extrusion.

The optical film can be also produced by dissolving or dispersing the vinyl-based polymer (A) and the cycloolefin-based polymer (B) in an appropriate solvent and then casting the resulting solution or dispersion by a solvent casting method to form a film. The solvent used herein is not specifically restricted provided that it is usually used for the solvent casting method and is capable of sufficiently dissolving the vinyl-based polymer (A) and the cycloolefin-based polymer (B). For example, a polar solvent or a non-polar solvent is employable. The polar solvent means a solvent having a dielectric constant at 20°C of not less than 4 and less than 80, and the non-polar solvent means a solvent having a dielectric constant at 20°C of not less than 1 and less than 4.

Examples of such polar solvents include water (78.5), dimethyl sulfoxide (46.7), acetonitrile (37.5), N,N-dimethylacetamide (37.8), γ-butyrolactone (39.0), dimethylformamide (36.7), methanol (32.6), N-methyl-2-pyrrolidone (32.0), tetramethylurea (23.0), acetone (20.7), 1-propanol (20.1), methyl ethyl ketone (18.5), 2-propanol (18.3), 1-butanol (17.8),

2-methoxyethanol (16.9), 2-butanol (15.8), isobutyl alcohol (15.8), 2-ethoxyethanol (13.0), pyridine (12.3), o-dichlorobenzene (9.9), methylene chloride (9.1), tetrahydrofuran (7.6), acetic acid (6.2), ethyl acetate (6.0), chlorobenzene (5.7), chloroform (4.8) and diethyl ether (4.3).

Examples of the non-polar solvents include o-xylene (2.6), toluene (2.4), p-xylene (2.3), benzene (2.3), carbon tetrachloride (2.2), cyclohexane (2.0), cyclopentane (2.0), heptane (1.9), hexane (1.9), nonane (2.0), pentane (1.8), trichloroethylene (3.4) and 2,2,4-trimethylpentane (1.9). The numbers in the parentheses are each a dielectric constant of each solvent.

The above solvents can be used singly or as a mixture of plural kinds. When a mixture of the solvents is used, the dielectric constant of the mixed solvent at 20°C is desired to be in the range of 2 to 15, preferably 2 to 10.

In this case, the value of the dielectric constant of the mixed solvent at 20°C can be estimated from a mixing ratio (by weight) between the solvents. For example, if a solvent a and a solvent b are mixed and if the weight fractions of the solvents a and b are represented by $W_a$ and $W_b$, respectively, and the dielectric constants of the solvents a and b at 20°C are represented by $\varepsilon_a$ and $\varepsilon_b$, respectively, the dielectric constant (ε value) of the mixed solvent can be calculated from the following formula:

$$\varepsilon \text{ value} = W_a \cdot \varepsilon_a + W_b \cdot \varepsilon_b$$

Of the above solvents, toluene is particularly preferably used because there is much latitude in the conditions capable of producing a film wherein the vinyl-based polymer (A) and the cycloolefin-based polymer (B) are homogeneously compatibilized.

The concentration of the thermoplastic resin composition in the solution (sometimes referred to as the "film-forming solution" hereinafter) used in the solvent casting method is in the range of usually 0.1 to 70% by weight, preferably 1 to 50% by weight, more preferably 10 to 35% by weight. If the concentration is too low, production of the film in a desired thickness is difficult. Further, when the solvent is removed by drying, foaming is liable to take place with evaporation of the solvent, often resulting in bad surface smoothness of the film. On the other hand, if the concentration is too high, viscosity of the film-forming solution becomes too high, and hence, it is sometimes difficult that the film obtained has uniform thickness and uniform surface profile.

The viscosity of the film-forming solution at room temperature is in the range of usually 1 to 1,000,000 (mPa·s), preferably 10 to 100,000 (mPa·s), more preferably 100 to 80,000 (mPa·s), particularly preferably 1,000 to 60,000 (mPa·s). The temperature in the preparation of the film-forming solution may be room temperature or higher than room temperature. The temperature should be such that the cycloolefin-based polymer (B) and the vinyl-based polymer (A) are homogeneously dissolved or dispersed by stirring them sufficiently.

To the film-forming solution, a colorant such as a dye or a pigment can be properly added when needed, and by the addition of the colorant, the obtainable film is colored.

In order to improve surface smoothness of the resulting film, a leveling agent may be added to the film-forming solution. As the leveling agent, various common agents can be used. Examples of such leveling agents include fluorine-based nonionic surface-active agents, special acrylic resin-based leveling agents and silicone-based leveling agents.

The film-forming solution prepared as above is cast by pouring or applying the solution onto an appropriate carrier, whereby a liquid layer of the film-forming solution is formed on the carrier. As the carrier, a metal drum, a steel belt, a polyester film made of polyethylene terephthalate (PET) or polyethylene naphthalate (PEN), a polytetrafluoroethylene belt or the like is employable.

If a polyester film is used as the carrier, the polyester film may be a surface-treated film. As a method of surface treatment, there can be mentioned a hydrophilic treatment method generally carried out, such as a method in which a layer of an acrylic resin or a sulfonate group-containing resin is formed on a surface of the polyester film by coating or laminating or a method in which hydrophilicity of a film surface is increased by corona discharge treatment or the like.

When the carrier is a metal drum, a steel belt, a polyester film or the like whose surface has been subjected to sand matting treatment or embossing treatment to form irregularities on the surface, the irregularities of the surface of the carrier are reproduced on the surface of the resulting film, whereby the film achieves a light diffusion function. As a matter of course, by directly subjecting the film to sand matting treatment, the film achieves a light diffusion function.

Examples of methods to apply the film-forming solution include use of a die or a coater, a spraying method, a brushing method, a roll coating method, a spin coating method and a dipping method.

By applying the film-forming solution repeatedly, film thickness and surface smoothness of the resulting film can be controlled.

The liquid layer formed on the carrier is then subjected to solvent removal treatment by drying or the like. As the drying method, a drying method generally used, such as a method in which the carrier with the liquid layer is passed through a drying oven by means of a large number of rollers, can be utilized. However, if bubbles are produced with evaporation

of the solvent in the drying process, properties of the resulting film are markedly deteriorated. Therefore, in order to avoid this, it is preferable to divide the drying process into plural (two or more) steps and to control the temperature or the air flow in each step.

Thereafter, the film obtained by the above drying is peeled from the carrier, whereby the optical film of the invention can be obtained.

In the optical film obtained as above, the amount of the residual solvent is usually not more than 10% by weight, preferably not more than 5% by weight, more preferably not more than 1% by weight, particularly preferably not more than 0.5% by weight. If the amount of the residual solvent in the film exceeds the upper limit of the above range, dimensional change of the film with time becomes large in the use of the film, so that such an amount is undesirable. Moreover, because of the residual solvent, the glass transition temperature is lowered, and heat resistance is also lowered occasionally, so that such an amount is undesirable.

In the case where the optical film is used as a raw material film of the retardation film of the invention, it sometimes becomes particularly necessary to properly control the amount of the residual solvent in the film in the above range. More specifically, in order that the film may be allowed to stably and uniformly exhibit retardation by stretch orientation, the amount of the residual solvent in the film is desired to be in the range of usually 10 to 0.1% by weight, preferably 5 to 0.1% by weight, more preferably 1 to 0.1% by weight. By allowing a slight amount of the solvent to remain in the film, stretch orientation sometimes becomes easy, or control of development of retardation sometimes becomes easy.

The optical film has a thickness of usually 0.1 to 3,000 μm, preferably 0.1 to 1,000 μm, more preferably 1 to 500 μm, most preferably 5 to 300 μm. If the film is too thin, handling properties of the film are sometimes lowered. If the film is too thick, it sometimes becomes difficult to wind up the film into a roll.

The thickness distribution of the optical film is in the range of usually ±20%, preferably ±10%, more preferably ±5%, particularly preferably ±3%, based on the mean value. The coefficient of variation of the thickness based on 1 cm is usually not more than 10%, preferably not more than 5%, more preferably not more than 1%, particularly preferably not more than 0.5%. By controlling the thickness distribution of the film in the above range, occurrence of retardation unevenness can be prevented in a film obtained by stretch-orienting the optical film.

## Retardation film

The retardation film of the invention can be produced by subjecting the above-mentioned optical film to stretching (stretch orientation). By the stretching, molecular chains of the polymer that forms the film are regularly oriented in a given direction, whereby a function of giving retardation to the transmitted light is exhibited. The expression "regularly oriented" used herein means that molecular chains of the high-molecular compound are regularly oriented in the monoaxial direction or the biaxial directions of the film plane or in the thickness direction of the film, while in the case where a usual high-molecular compound (polymer) is formed into a film by melt extrusion, casting or the like, molecular chains of the high-molecular compound are not arranged in a specific direction but are at random though it depends upon a magnitude of film strain produced in the forming process. The degrees of regularity of the orientation of the high-molecular compound are various and can be controlled by the stretching conditions.

The stretching method is specifically a monoaxial stretching method or a biaxial stretching method publicly known. That is to say, there can be mentioned crosswise monoaxial stretching by tentering, compression stretching between rolls, lengthwise monoaxial stretching using two rolls having different circumferences, biaxial stretching combining crosswise monoaxial stretching with lengthwise monoaxial stretching, stretching by inflation, and the like.

In the case of the monoaxial stretching method, the stretching rate is in the range of usually 1 to 5,000%/min, preferably 50 to 1,000%/min, more preferably 100 to 1,000%/min, particularly preferably 100 to 500%/min.

The biaxial stretching method may be such that the film is stretched in two directions intersecting each other at the same time or such that the film is monoaxially stretched and then stretched in a direction different from the initial stretching direction. In these methods, the intersecting angle between the two stretching axes is not specifically restricted because it is determined according to the desired properties, but it is usually in the range of 120 to 60 degrees. The stretching rates in the stretching directions may be the same or different and are each in the range of usually 1 to 5,000%/min, preferably 50 to 1,000%/min, more preferably 100 to 1,000%/min, particularly preferably 100 to 500%/min.

The temperature in the stretching is not specifically restricted. However, when the glass transition temperature of the optical film (thermoplastic resin composition) used is represented by Tg, the stretching temperature is desired to be in the range of usually not lower than Tg and not higher than Tg+30°C, preferably not lower than Tg and not higher than Tg+20°C, more preferably not lower than Tg and not higher than Tg+10°C. When the stretching temperature is in the above range, large retardation can be exhibited, occurrence of retardation unevenness can be inhibited, and control of index ellipsoid can be easily made, so that such a temperature is favorable.

The stretch ratio is not specifically restricted because it is determined according to various properties such as desired retardation. However, the stretch ratio is in the range of usually 1.01 to 10 times, preferably 1.03 to 5 times,

more preferably 1.03 to 3 times.

In the case of the thermoplastic resin composition of the invention, stretching can be carried out at a temperature in the vicinity of Tg, so that it is possible to apply high stress to the film even by stretching in a low stretch ratio, and large retardation can be obtained. When the stretch ratio is relatively low as described above, a retardation film having transparency and free from deviation of optical axis can be readily produced. If the stretch ratio is too high, control of retardation sometimes becomes difficult.

Although the film having been stretched in the above manner may be cooled as it is at room temperature, it is desirable that the film is held at about a temperature of not lower than Tg-100°C and not higher than Tg for at least 10 seconds, preferably 30 seconds to 60 minutes, more preferably 1 minute to 60 minutes, to perform heat setting and then the film is cooled down to room temperature. The resulting retardation film suffers small change of retardation of the transmitted light with time and has stable retardation properties.

In the retardation film obtained as above, molecules are oriented by stretching, and thereby, retardation is given to the transmitted light. The absolute value of the retardation can be controlled by controlling the stretch ratio, the film thickness before stretching, etc. For example, even if films have the same thickness as each other before stretching, a film having a higher stretch ratio tends to provide a larger absolute value of retardation of the transmitted light. Therefore, by changing the stretch ratio, the retardation film can give desired retardation to the transmitted light. Further, even if films have the same stretch ratio as each other, a film having a larger thickness before stretching tends to provide a larger absolute value of retardation of the transmitted light. Therefore, by changing the film thickness before stretching, the retardation film can give desired retardation to the transmitted light.

The value of retardation given by the retardation film obtained as above to the transmitted light is determined according to the use application and is not determined indiscriminately. However, when the retardation film is used for a liquid crystal display device, an electroluminescence display device or a wave plate of laser optical system, the retardation value is in the range of usually 1 to 10,000 nm, preferably 10 to 2,000 nm, more preferably 15 to 1,000 nm.

The retardation of a light transmitted by the film is preferably highly uniform, and specifically, the dispersion at a wavelength of 550 nm is desired to be in the range of usually ±20%, preferably ±10%, more preferably ±5%. If the dispersion of retardation is out of the range of ±20%, a liquid crystal display device using the film suffers color unevenness, and there sometimes occurs a problem that the performance of the display main body is lowered.

Further, the retardation of a light transmitted by the film depends upon a wavelength of the transmitted light. The retardation film of the invention preferably has reciprocal wavelength dispersion properties. Specifically, when retardation values at wavelengths of 400 nm, 550 nm, 660 nm and 800 nm are represented by $Re_{400}$, $Re_{550}$, $Re_{660}$ and $Re_{800}$, respectively, they desirably have a relationship of $Re_{400}<Re_{550}<Re_{660}<Re_{800}$. Further, the ratio ($Re_{660}/Re_{550}$) of retardation ($Re_{660}$) at a wavelength of 660 nm to retardation ($Re_{550}$) at a wavelength of 550 nm is preferably not less than 1.02, particularly preferably not less than 1.03. If the retardation film has a $Re_{660}/Re_{550}$ ratio of less than the lower limit of the above range, a liquid crystal display containing the film sometimes lacks sharpness.

The retardation film having such reciprocal wavelength dispersion properties as mentioned above can be produced by monoaxially or biaxially stretching an optical film obtained from the aforesaid thermoplastic resin composition and having a thickness of 0.1 to 3,000 μm, at a stretching rate of 1 to 5,000%/min in a stretch ratio of 1.01 to 10 times. The retardation (birefringence value) $\Delta n$ of the retardation film of the invention is usually not less than 0.0005, preferably not less than 0.0010, more preferably not less than 0.0015, at a wavelength of 550 nm. If the $\Delta n$ is less than the lower limit of the above range, the film thickness needs to be increased in order that the film may give retardation to the transmitted light, and such thick film has reduced light transmittance or requires long drying time in the film production process, and as a result, film productivity is sometimes lowered.

The retardation film of the invention can be used as a single film or a laminate of two or more films, or can be used by laminating the film onto a transparent substrate. Further, the retardation film can be used also by laminating it onto another film, a sheet or a substrate.

For lamination of the retardation film, an adhesive or a bonding material is employable. As the adhesive or the bonding material, one having excellent transparency is preferably used. Examples of such adhesives or bonding materials include adhesives, such as natural rubbers, synthetic rubbers, a vinyl acetate/vinyl chloride copolymer, polyvinyl ether, acrylic resins and modified polyolefin-based resins; curing type adhesives obtained by adding a curing agent, such as an isocyanate group-containing compound, to the above resins having a functional group such as a hydroxyl group or an amino group; polyurethane-based bonding materials for dry lamination; synthetic rubber-based bonding materials; and epoxy-based bonding materials.

In order to enhance workability in laminating the retardation film onto another film, a sheet, a substrate or the like, an adhesive layer or a bonding material layer may be laminated in advance onto the retardation film. In the case where the adhesive layer or the bonding material layer is laminated, the aforesaid adhesive or bonding material is employable as the adhesive or the bonding material.

The optical film and the oriented film (retardation film) of the invention can be used for various liquid crystal display devices, such as cell phones, digital information terminals, pocket bells, navigation systems, on-vehicle liquid crystal

displays, liquid crystal monitors, dimmer panels, displays for OA machines and displays for AV machines, electroluminescence display devices, touch panels, etc. Moreover, they are useful as wave plates used for recording/reproducing apparatuses for optical discs, such as CD, CD-R, MD, MO and DVD.

## EXAMPLES

The present invention is further described with reference to the following examples, but it should be construed that the invention is in no way limited to those examples.

### Measuring and evaluation methods

(1) Intrinsic viscosity

A chlorobenzene solution having a concentration of 0.5 g/100 ml was prepared, and the intrinsic viscosity was measured at 30°C.

(2) Molecular weight

Using HLC-8020 gel permeation chromatograph (GPC, manufactured by Tosoh Corporation, column: TSKgelG-$MX_{XL}$ and TSKgelG7000$H_{XL}$ manufactured by Tosoh Corporation) and using a tetrahydrofuran (THF) solvent, the number-average molecular weight (Mn), weight-average molecular weight (Mw) and molecular weight distribution (Mw/Mn), in terms of polystyrene, were measured.

(3) Glass transition temperature

Using DSC6200 (manufactured by Seiko Instruments Inc.), the glass transition temperature was measured in a stream of nitrogen at a heating rate of 20°C/min. Tg was determined in the following manner. A maximum peak temperature (A point) of derivative differential scanning calories and a temperature (B point) obtained by subtracting 20°C from the maximum peak temperature were plotted on a differential scanning calorie curve, and the glass transition temperature was determined as an intersecting point between a tangent on a base line having the B point as a starting point and a tangent on a base line having the A point as a starting point.

(4) Transparency (measurement of total light transmittance)

The total light transmittance of a film prepared was measured in accordance with JIS K7105 (measuring method A) using a haze meter (manufactured by Suga Test Instrument Co., Ltd., HGM-2DP).

(5) Haze

The haze of a film prepared was measured in accordance with JIS K7105 using a haze meter (manufactured by Suga Test Instrument Co., Ltd., HGM-2DP).

(6) Transparency of film

Transparency of a cast film (unstretched) was visually observed and evaluated based on the following evaluation criteria.

AA: Even when the film was held to the light of a fluorescent lamp, any fog (opacity) was not observed at all.
BB: The film was transparent seemingly, but when the film was held to the light of a fluorescent lamp, fog (opacity) was somewhat observed.
CC: At a glance, fog (opacity) was observed on the film. (7) Retardation, birefringence value and reciprocal wavelength dispersion of retardation film

Retardations at 550 nm and 660 nm of a film after stretching were measured by the use of an automatic birefringence meter (manufactured by Oji Scientific Instruments, KOBRA-21ADH). The birefringence value and the wavelength dispersion of the retardation film were determined by the following formulas.

$$\text{Birefringence value } (\Delta n) = R_{550}/d$$

($R_{550}$, $R_{660}$: retardations at wavelengths of 550 nm and 660 nm, d: film thickness)

Preparation Example 1

In a reaction vessel purged with nitrogen, 50 g of 8-methyl-8-methoxycarbonyltetracyclo [4.4.0.1$^{2,5}$.1$^{7,10}$] -3-dodecene represented by the following formula as a specific monomer, 3.5 g of 1-hexene as a molecular weight modifier and 100 g of toluene as a solvent were placed, and they were heated to 80°C.

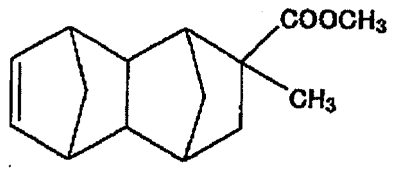

Then, 0.09 ml of a toluene solution of triethylaluminum (concentration: 0.6 mol/l) and 0.29 ml of a toluene solution of methanol-modified tungsten hexachloride (concentration: 0.025 mol/l) were added, and reaction was performed at 80°C for 1 hour to ring-opening polymerize the monomer.

Subsequently, the resulting toluene solution of the ring-opened polymer was placed in an autoclave, and toluene was further added so that the total amount should become 500 ml. To the solution, 50 mg of $RuHCl(CO)[P(C_6H_5)_3]_3$ was added as a hydrogenation catalyst. Thereafter, the hydrogen gas pressure was adjusted to 9.5 to 10 MPa, and reaction was performed at 160 to 165°C for 3 hours. After the reaction was completed, the reaction product was reprecipitated in a large amount of a methanol solution to give a cycloolefin polymer (1) (intrinsic viscosity [η] = 0.78 dl/g, weight-average molecular weight (Mw) = $11.5 \times 10^4$, molecular weight distribution (Mw/Mn) = 3.20, glass transition temperature (Tg) = 167°C) that was a hydrogenation product of the ring-opened polymer. As a result of NMR measurement, the degree of hydrogenation of the cycloolefin polymer (1) was 99.6%.

Preparation Example 2

In a reaction vessel, 9.8 g of styrene, 0.2 g of 2-hydroxyethyl methacrylate, 0.033 g of 2,2'-azobisisobutyronitrile (AIBN) and 5 ml of toluene were placed (copolymerization ratio based on charge ratio: structural units derived from styrene/structural units derived from 2-hydroxyethyl methacrylate = 98/2 (by weight)). A stream of nitrogen was bubbled for 10 minutes, and then reaction was performed at 80°C for 7 hours. After the reaction was completed, the reaction product was reprecipitated in a large amount of methanol to give a styrene/2-hydroxyethyl methacrylate copolymer (1). The styrene/2-hydroxyethyl methacrylate copolymer (1) had a weight-average molecular weight (Mw) of 79,800, a molecular weight distribution (Mw/Mn) of 2.11 and a glass transition temperature (Tg) of 103°C.

Preparation Example 3

In a reaction vessel, 9.6 g of styrene, 0.4 g of 2-hydroxyethyl methacrylate, 0.06 g of 2,2'-azobisisobutyronitrile (AIBN) and 5 ml of toluene were placed (copolymerization ratio based on charge ratio: structural units derived from styrene/structural units derived from 2-hydroxyethyl methacrylate = 96/4 (by weight)). A stream of nitrogen was bubbled for 10 minutes, and then reaction was performed at 80°C for 6 hours. After the reaction was completed, the reaction product was reprecipitated in a large amount of methanol to give a styrene/2-hydroxyethyl methacrylate copolymer (2). The styrene/2-hydroxyethyl methacrylate copolymer (2) had a weight-average molecular weight (Mw) of 80400, a molecular weight distribution (Mw/Mn) of 2.13 and a glass transition temperature (Tg) of 103°C.

Preparation Example 4

In a reaction vessel, 9.2 g of styrene, 0.8 g of 2-hydroxyethyl methacrylate, 0.033 g of 2,2'-azobisisobutyronitrile (AIBN) and 5 ml of toluene were placed (copolymerization ratio based on charge ratio: structural units derived from styrene/structural units derived from 2-hydroxyethyl methacrylate = 92/8 (by weight)). A stream of nitrogen was bubbled

for 10 minutes, and then reaction was performed at 80°C for 7 hours. After the reaction was completed, the reaction product was reprecipitated in a large amount of methanol to give a styrene/2-hydroxyethyl methacrylate copolymer (3). The styrene/2-hydroxyethyl methacrylate copolymer (3) had a weight-average molecular weight (Mw) of 80900, a molecular weight distribution (Mw/Mn) of 1.92 and a glass transition temperature (Tg) of 103°C.

Preparation Example 5

In a reaction vessel, 9.9 g of styrene, 0.1 g of 2-hydroxyethyl methacrylate, 0.033 g of 2,2'-azobisisobutyronitrile (AIBN) and 5 ml of toluene were placed (copolymerization ratio based on charge ratio: structural units derived from styrene/structural units derived from 2-hydroxyethyl methacrylate = 99/1 (by weight)). A stream of nitrogen was bubbled for 10 minutes, and then reaction was performed at 80°C for 7 hours. After the reaction was completed, the reaction product was reprecipitated in a large amount of methanol to give a styrene/2-hydroxyethyl methacrylate copolymer (4). The styrene/2-hydroxyethyl methacrylate copolymer (4) had a weight-average molecular weight (Mw) of 65300, a molecular weight distribution (Mw/Mn) of 1.77 and a glass transition temperature (Tg) of 103°C.

Example 1

In toluene, the cycloolefin polymer (1) and the styrene/2-hydroxyethyl methacrylate copolymer (1) were dissolved in a ratio of 65:35 (cycloolefin polymer (1):styrene/2-hydroxyethyl methacrylate copolymer (1), by weight) to prepare a solution having a concentration of 30% by weight. Thereafter, the solution was subjected to film formation using a solution casting method and then vacuum dried at 100°C for 72 hours to give a transparent film (haze value: 1.1) having a film thickness of 135 μm. As a result of differential scanning calorimetry (DSC), the transparent film exhibited a single Tg of 106°C. The result proved that the cycloolefin polymer (1) and the styrene/2-hydroxyethyl methacrylate copolymer (1) had been completely compatibilized with each other.

The transparent film was cut into a size of 10 mm × 80 mm, and the film thus cut was stretched in a stretch ratio of 2.0 times by a free end monoaxial stretching method using an Instron tensile tester (5567 type) equipped with a constant temperature bath under the conditions of a stretching temperature of 121°C (Tg+15°C), a stretching rate of 60 mm/min and an initial chuck distance of 50 mm. Consequently, a sample 93 μm in thickness was obtained for retardation measurement.

Example 2

In toluene, the cycloolefin polymer (1) and the styrene/2-hydroxyethyl methacrylate copolymer (2) were dissolved in a ratio of 65:35 (cycloolefin polymer (1):styrene/2-hydroxyethyl methacrylate copolymer (2), by weight) to prepare a solution having a concentration of 30% by weight. Thereafter, the solution was subjected to film formation using a solution casting method and then vacuum dried at 100°C for 72 hours to give a transparent film (haze value: 0.5) having a film thickness of 112 μm. As a result of differential scanning calorimetry (DSC), the transparent film exhibited a single Tg of 105°C. The result proved that the cycloolefin polymer (1) and the styrene/2-hydroxyethyl methacrylate copolymer (2) had been completely compatibilized with each other.

The transparent film was cut into a size of 10 mm × 80 mm, and the film thus cut was stretched in a stretch ratio of 2.0 times by a free end monoaxial stretching method using an Instron tensile tester (5567 type) equipped with a constant temperature bath under the conditions of a stretching temperature of 120°C (Tg+15°C), a stretching rate of 60 mm/min and an initial chuck distance of 50 mm. Consequently, a sample 81 μm in thickness was obtained for retardation measurement.

Example 3

In toluene, the cycloolefin polymer (1) and the styrene/2-hydroxyethyl methacrylate copolymer (3) were dissolved in a ratio of 65:35 (cycloolefin polymer (1):styrene/2-hydroxyethyl methacrylate copolymer (3), by weight) to prepare a solution having a concentration of 30% by weight. Thereafter, the solution was subjected to film formation using a solution casting method and then vacuum dried at 100°C for 72 hours to give an almost transparent film (haze value: 7.0) having a film thickness of 147 μm. As a result of differential scanning calorimetry (DSC), the transparent film exhibited a single Tg of 105°C. The result proved that the cycloolefin polymer (1) and the styrene/2-hydroxyethyl methacrylate copolymer (3) had been compatibilized with each other.

The transparent film was cut into a size of 10 mm × 80 mm, and the film thus cut was stretched in a stretch ratio of 2.0 times by a free end monoaxial stretching method using an Instron tensile tester (5567 type) equipped with a constant temperature bath under the conditions of a stretching temperature of 120°C (Tg+15°C), a stretching rate of 60 mm/min and an initial chuck distance of 50 mm. Consequently, a sample 104 μm in thickness was obtained for

retardation measurement.

Comparative Example 1

Only the cycloolefin polymer (1) was dissolved in toluene to prepare a solution having a concentration of 30% by weight. Thereafter, the solution was subjected to film formation using a solution casting method and then vacuum dried at 100°C for 72 hours to give a transparent film (haze value: 0.4) having a film thickness of 100 μm. As a result of differential scanning calorimetry (DSC), the transparent film exhibited a single Tg of 167°C.

The transparent film was cut into a size of 10 mm × 80 mm, and the film thus cut was stretched in a stretch ratio of 2.0 times by a free end monoaxial stretching method using an Instron tensile tester (5567 type) equipped with a constant temperature bath under the conditions of a stretching temperature of 182°C (Tg+15°C), a stretching rate of 60 mm/min and an initial chuck distance of 50 mm. Consequently, a sample 70 μm in thickness was obtained for retardation measurement.

Comparative Example 2

In toluene, the cycloolefin polymer (1) and the styrene/2-hydroxyethyl methacrylate copolymer (4) were dissolved in a ratio of 65:35 (cycloolefin polymer (1):styrene/2-hydroxyethyl methacrylate copolymer (4), by weight) to prepare a solution having a concentration of 30% by weight. Thereafter, the solution was subjected to film formation using a solution casting method and then vacuum dried at 100°C for 72 hours to give a film (haze value: 87.4) having a film thickness of 100 μm. This film was opaque, and as a result of differential scanning calorimetry (DSC), Tg attributable to the cycloolefin polymer (1) and Tg attributable to the styrene/2-hydroxyethyl methacrylate copolymer (4) were observed. The result proved that the cycloolefin polymer (1) and the styrene/2-hydroxyethyl methacrylate copolymer (4) had not been compatibilized with each other. Therefore, stretching and evaluation of the film were not carried out.

Comparative Example 3

In toluene, the cycloolefin polymer (1) and commercially available polystyrene (polystyrene available from PSJ-Japan, Mw: 219000, Mw/Mn: 2.69, Tg: 101°C) were dissolved in a ratio of 65:35 (cycloolefin polymer (1):polystyrene, by weight) to prepare a solution having a concentration of 30% by weight. Thereafter, the solution was subjected to film formation using a solution casting method and then vacuum dried at 100°C for 72 hours to give a film (haze value: 89.0) having a film thickness of 175 μm. This film was opaque, and as a result of differential scanning calorimetry (DSC), Tg attributable to the cycloolefin polymer (1) and Tg attributable to the polystyrene were observed. The result proved that the cycloolefin polymer (1) and the polystyrene had not been compatibilized with each other. Therefore, stretching and evaluation of the film were not carried out.

All the results are set forth in Table 1.

Table 1

Table 1

| | Ex. 1 | Ex. 2 | Ex. 3 | Comp. Ex. 1 | Comp. Ex. 2 | Comp. Ex. 3 |
|---|---|---|---|---|---|---|
| Cycloolefin Polymer (1) | 65 | 65 | 65 | 100 | 65 | 65 |
| Styrene/2-Hydroxyethyl methacrylate Copolymer (1) | 35 | | | | | |
| Styrene/2-Hydroxyethyl methacrylate Copolymer (2) | | 35 | | | | |
| Styrene/2-Hydroxyethyl methacrylate Copolymer (3) | | | 35 | | | |
| Styrene/2-Hydroxyethyl methacrylate Copolymer (4) | | | | | 35 | |
| Polystyrene | | | | | | 35 |
| Cast Film | | | | | | |
| Total Light Transmittance (%) | 92.3 | 92.3 | 92.6 | 92.5 | Not Measured | Not Measured |
| Haze | 1.1 | 0.5 | 7.0 | 0.4 | 87.4 | 89.0 |
| Transparency of the Film (Visual Observation) | AA | AA | BB-AA | AA | CC (Incompatible) | CC (Incompatible) |
| Glass Transition Temperature (°C) | 106 | 105 | 105 | 167 | 2 Peaks | 2 Peaks |
| Birefringence Value (@550nm) | 0.00162 | 0.00192 | 0.00183 | 0.00354 | Immeasurable | Immeasurable |
| $Re_{650}/Re_{550}$ (stretch ratio: 2 times) | 1.02 | 1.03 | 1.02 | 0.99 | Immeasurable | Immeasurable |
| Wavelength Dispersion Properties | $Re_{400}<Re_{550}<Re_{800}$ | $Re_{400}<Re_{550}<Re_{800}$ | $Re_{400}<Re_{550}<Re_{800}$ | $Re_{400}>Re_{550}>Re_{800}$ | Immeasurable | Immeasurable |

As is apparent from the above table, the oriented films of the resin compositions obtained in Examples 1 to 3 showed smaller birefringence values as compared with the film obtained in Comparative Example 1. This result means that the resin compositions of the invention possess lower birefringence than the conventional cycloolefin-based polymer. Further, it is apparent from the numerical values described in the table that the absolute value of the birefringence of the resin compositions of the invention can be controlled by the composition of the vinyl-based polymer and the blending ratio between the cycloolefin-based polymer and the vinyl-based polymer. That is, the materials of the present invention can exhibit a desired birefringence value, in particular low birefringence, required for shaped articles such as an oriented film (retardation film), and so can the optical films thereof according to the invention.

From a liquid crystal panel of a liquid crystal TV apparatus (LC-13B1-S, manufactured by Sharp Corporation) adopting an ASV system low-reflection black TFT liquid crystal, a polarizing plate and a retardation film attached onto the front face of the liquid crystal panel on the observer's side were peeled off. The polarizing plate thus peeled and an oriented film having a dependence of retardation on wavelength equivalent to that of the oriented film obtained in Example 2 and having Re(550) of 137nm$\pm$5nm were attached in such a manner that the oriented film was on the side of the liquid crystal cell and the transmission axis of the polarizing plate newly attached was the same as the transmission axis of the polarizing plate originally attached.

It was confirmed that the liquid crystal TV apparatus having the oriented film obtained in Example 2 suffered little coloring and had excellent contrast in the black display as viewed from an azimuth angle of 45 degrees and a pole angle of 60 degrees. Consequently, visibility was excellent.

As shown by the numerical values described in the table, it is apparent that the oriented films of the resin compositions obtained in Examples 1 to 3 exhibited specific wavelength dispersion properties (reciprocal wavelength dispersion properties) of $Re_{400}<Re_{550}<Re_{800}$ which were different from the wavelength dispersion properties ($Re_{400}>Re_{550}>Re_{800}$) of the comparative example. It is apparent that the wavelength dispersion of the resin compositions of the invention can be controlled by the composition of the vinyl-based polymer and the blending ratio between the cycloolefin-based polymer and the vinyl-based polymer. That is, the materials of the present invention can exhibit desired wavelength dispersion of birefringence (or retardation) required for shaped articles such as an oriented film, and so can the optical films thereof according to the invention.

The anhydride unit in the maleic anhydride/styrene copolymer disclosed in Japanese Patent Laid-Open Publication No. 337222/2001 has high reactivity and has a fear of possibility of decomposition by the reaction with moisture in the surrounding atmosphere. Therefore, a retardation film made of the resin composition has insufficient long-term stability. The resin composition of the invention, in contrast, does not have a functional group that will be decomposed by moisture or the like in the surrounding atmosphere, and therefore can provide an oriented film (retardation film) having higher reliability.

## Claims

1. A thermoplastic resin composition comprising a vinyl-based polymer (A) having a unit represented by the following formula (I) and a cycloolefin-based polymer (B);

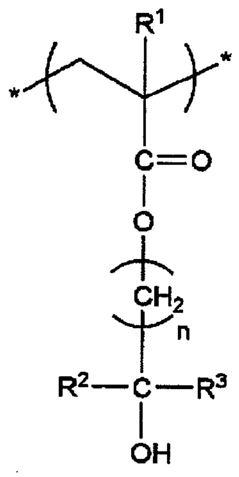

(I)

wherein $R^1$ to $R^3$ are each independently a hydrogen atom, a halogen atom, a substituted or unsubstituted hydrocarbon group of 1 to 30 carbon atoms which may have a linkage containing an oxygen atom, a sulfur atom, a nitrogen

atom or a silicon atom, or a polar group, and n is 0 or a positive integer.

2. The thermoplastic resin composition as claimed in claim 1, wherein the vinyl-based polymer (A) further has at least one unit selected from units of the following formula (II) and the following formula (III):

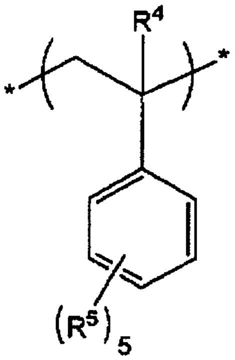

(II)

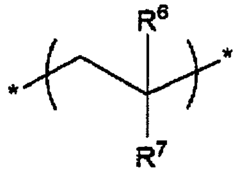

(III)

wherein $R^4$ to $R^7$ are each independently a hydrogen atom, a halogen atom, a substituted or unsubstituted hydrocarbon group of 1 to 30 carbon atoms which may have a linkage containing an oxygen atom, a sulfur atom, a nitrogen atom or a silicon atom, or a polar group, and $R^5$ may be all the same atoms or groups as one another or may be different atoms or groups from one another.

3. The thermoplastic resin composition as claimed in claim 1, wherein the vinyl-based polymer (A) is a polymer having repeating units represented by the following formulas (1) :

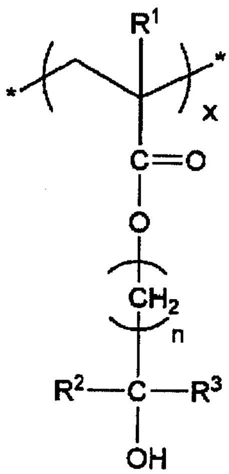

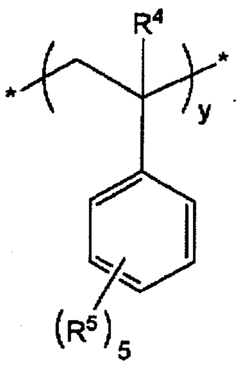

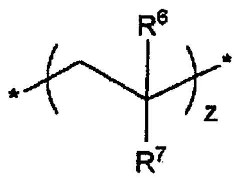

(1)

wherein $R^1$ to $R^7$ are each independently a hydrogen atom, a halogen atom, a substituted or unsubstituted hydrocarbon group of 1 to 30 carbon atoms which may have a linkage containing an oxygen atom, a sulfur atom, a nitrogen atom or a silicon atom, or a polar group, $R^5$ may be all the same atoms or groups as one another or may be different atoms or groups from one another, n is 0 or a positive integer, and x, y and z are each a weight percent of the repeating unit based on x+y+z=100% by weight and satisfy the conditions of $1<x<20$ and $80<y<99$.

4. The thermoplastic resin composition as claimed in claim 3, wherein in the formulas (1) representing the repeating units of the vinyl-based polymer, n is a number of $0 \leq n<4$, and $R^1$ to $R^4$ are each a hydrogen atom or a methyl group.

5. The thermoplastic resin composition as claimed in any one of claims 1 to 4, wherein the cycloolefin-based polymer (B) is a polymer obtained by polymerizing a monomer represented by the following formula (2):

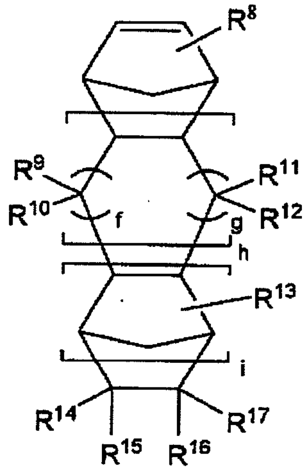

(2)

wherein f and g are each independently 0 or 1 with the proviso that at least one of them is 1, h and i are each independently an integer of 0 to 2, $R^8$ to $R^{17}$ are each independently an atom or a group selected from the group consisting of a hydrogen atom, a halogen atom, a substituted or unsubstituted hydrocarbon group of 1 to 30 carbon atoms which may have a linkage containing an oxygen atom, a nitrogen atom, a sulfur atom or a silicon atom, and a polar group, $R^{14}$ and $R^{15}$, and/or $R^{16}$ and $R^{17}$ may be united to form a hydrocarbon group, and $R^{14}$ or $R^{15}$ and $R^{16}$ or $R^{17}$ may be bonded to each other to form a carbon ring or a heterocyclic ring (said carbon ring or said heterocyclic ring may have a monocyclic structure or may be condensed with another ring to form a polycyclic structure).

**6.** The thermoplastic resin composition as claimed in claim 5, wherein the cycloolefin-based polymer (B) is a polymer obtained by ring-opening polymerization of the monomer represented by the formula (2) and having a structural unit represented by the following formula (3):

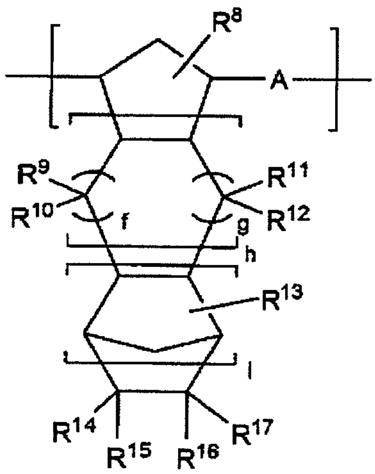

(3)

wherein f and g are each independently 0 or 1 with the proviso that at least one of them is 1, h and i are each independently an integer of 0 to 2, $R^8$ to $R^{17}$ are each independently an atom or a group selected from the group consisting of a hydrogen atom, a halogen atom, a substituted or unsubstituted hydrocarbon group of 1 to 30 carbon atoms which may have a linkage containing an oxygen atom, a nitrogen atom, a sulfur atom or a silicon atom, and a polar group, $R^{14}$ and $R^{15}$, and/or $R^{16}$ and $R^{17}$ may be united to form a hydrocarbon group, $R^{14}$ or $R^{15}$ and $R^{16}$ or $R^{17}$ may be bonded to each other to form a carbon ring or a heterocyclic ring (said carbon ring or said heterocyclic ring may have a monocyclic structure or may be condensed with another ring to form a polycyclic structure), A is a

group represented by the formula -CH=CH- or a group represented by the formula - $CH_2CH_2$-, and plural A may be the same or different.

**7.** The thermoplastic resin composition as claimed in claim 6, wherein in the formula (3) representing the structural unit of the cycloolefin-based polymer (B), h is 0, i is 0 or 1, and at least one of $R^{14}$ to $R^{17}$ is a group represented by the formula - $(CH_2)_pCOOR^{18}$ (wherein $R^{18}$ is a hydrocarbon group of 1 to 20 carbon atoms, and p is an integer of 0 to 10).

**8.** The thermoplastic resin composition as claimed in any one of claims 1 to 7, wherein the blending ratio (A/B) by weight of the vinyl-based polymer (A) to the cycloolefin-based polymer (B) is in the range of 10/90 to 50/50.

**9.** An optical film obtained by molding the thermoplastic resin composition of any one of claims 1 to 8.

**10.** An oriented film obtained by stretch-orienting the optical film of claim 9 and having properties that when retardation values of the oriented film at wavelengths of 400 nm, 550 nm and 800 nm are represented by $Re_{400}$, $Re_{550}$ and $Re_{800}$, respectively, they have a relationship of $Re_{400}<Re_{550}<Re_{800}$.

**INTERNATIONAL SEARCH REPORT**

International application No.
PCT/JP2005/023935

A. CLASSIFICATION OF SUBJECT MATTER
***C08L33/14***(2006.01), ***C08L25/00***(2006.01), ***C08L45/00***(2006.01), ***C08L65/00***(2006.01), ***G02B5/30***(2006.01)

According to International Patent Classification (IPC) or to both national classification and IPC

B. FIELDS SEARCHED

Minimum documentation searched (classification system followed by classification symbols)
C08L25/00, C08L33/14, C08L45/00, C08L65/00, G02B5/30

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
WPI/L

C. DOCUMENTS CONSIDERED TO BE RELEVANT

| Category* | Citation of document, with indication, where appropriate, of the relevant passages | Relevant to claim No. |
|---|---|---|
| X<br>Y | JP 2003-268167 A (Sekisui Chemical Co., Ltd.), 25 September, 2003 (25.09.03), Claims; Par. Nos. [0009], [0010] (Family: none) | 1-6,8<br>7,9,10 |
| X<br>A | JP 05-117464 A (Dainippon Ink And Chemicals, Inc.), 14 May, 1993 (14.05.93), Claims; Par. Nos. [0008], [0009] (Family: none) | 1-4,8<br>5-7,9,10 |
| Y<br>A | JP 03-281564 A (Japan Synthetic Rubber Co., Ltd.), 12 December, 1991 (12.12.91), Examples (Family: none) | 7<br>1-6,8-10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 March, 2006 (16.03.06) | 28 March, 2006 (28.03.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2005/023935

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2003-139950 A (Sekisui Chemical Co., Ltd.),<br>14 May, 2003 (14.05.03),<br>Claims; Par. No. [0021]<br>(Family: none) | 7,9,10<br>1-6,8 |
| Y<br>A | JP 2003-128885 A (Polyplastics Co., Ltd.),<br>08 May, 2003 (08.05.03),<br>Claims; Par. No. [0017]<br>(Family: none) | 7<br>1-6,8-10 |
| Y<br>A | JP 2002-187994 A (Hitachi Chemical Co., Ltd.),<br>05 July, 2002 (05.07.02),<br>Full text<br>(Family: none) | 9,10<br>1-8 |
| A | JP 02-276816 A (Mitsui Petrochemical Industries, Ltd.),<br>13 November, 1990 (13.11.90),<br>Full text<br>(Family: none) | 1-10 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003321535 A
- JP 2004176051 A
- JP 2004323489 A
- JP 2001194527 A
- JP 11323098 A
- JP 2001337222 A
- JP 1240517 A


### Non-patent literature cited in the description


- **K.J. IVIN ; J.C. MOL.** *Olefin Metathesis and Metathesis Polymerization,* 1997
- **T.M. TRNKA et al.** *Acc. Chem. Res.,* 2001, vol. 34, 18-29
- **R.R. SCHROCK.** *Chem. Rev.,* 2002, vol. 102, 145-179